# EUROPEAN PATENT APPLICATION

(11) **EP 4 671 332 A1**
(43) Date of publication of application: **31.12.2025**
(21) Application number: 24759969.9
(22) Date of filing: 17.01.2024
(51) Int. Cl.: C09D 11/30, B41J 2/01, B41M 5/00, B41M 5/52, C09D 11/40, C09D 11/54, C09D 11/322, D06P 5/26, D06P 5/30

(54) **ADHESIVE INK, AND METHOD FOR PRODUCING PRINTED MATERIAL USING SAID ADHESIVE INK**

(30) Priority: 20.02.2023 JP 2023024440; 24.02.2023 JP 2023027251
(71) Applicant: Nippon Shokubai Co., Ltd., Osaka-shi, Osaka 541-0043 (JP)
(72) Inventor: AKIYAMA, Tatsuhiko, Suita-shi, Osaka 564-0034 (JP); NAKAMOTO, Keiichi, Suita-shi, Osaka 564-0034 (JP); KATAKURA, Naoki, Suita-shi, Osaka 564-0034 (JP); IMIYA, Hiroto, Suita-shi, Osaka 564-0034 (JP)
(74) Representative: Müller-Boré & Partner Patentanwälte PartG mbB
(86) International application number: PCT/JP2024/001045
(87) International publication number: WO 2024/176662

(57) **Abstract**

An object of the present invention is to provide an adhesive ink excellent in transferability onto a fabric during transfer printing and capable of enhancing fastness to wet rubbing and texture of an obtained printed material. The object can be achieved by an adhesive ink containing a resin, a water-soluble organic solvent, and water, in which the resin has a glass transition temperature of 30°C or lower and a weight average molecular weight of 10000 to 700000.

## Description

### Technical Field

The present invention relates to an adhesive ink, an ink set including the adhesive ink, a transfer medium including the adhesive ink, and a printed material produced by transfer printing using the adhesive ink.

### Background Art

In the related art, there is a known method in which a character or an image formed by printing a colored ink on a transfer base material is transfer-printed onto a transfer-receiving medium. For example, Patent Document 1 describes that excellent transferability to a transfer-receiving medium such as plastic is achieved using a transfer medium that is produced by a method including a colored layer forming step of ejecting ink from an inkjet head toward a base material to form a colored layer on the base material, and an adhesive layer forming step of ejecting an adhesive liquid from an inkjet head toward the colored layer to form an adhesive layer on the colored layer.

Patent Document 2 describes an aqueous hot-melt adhesive ink for digital textile printing, and describes that by adjusting amounts of an aqueous hot-melt adhesive resin, an aqueous curing agent, a humectant, a surfactant, an antifoaming agent, a bactericidal preservative, a pH adjuster, and deionized water, it is possible to provide an adhesive ink that can be applied to inkjet printing work and has good adhesive strength, water resistance, and flexibility.

### Citation List

### Patent Document

Patent Document 1: JP 2012-126026 A
Patent Document 2: CN 111117360 A

### Summary of Invention

### Technical Problem

In transfer printing, it is required not only that transferability is excellent, but also that when a transfer-receiving medium is a fabric, fastness to wet rubbing and texture of the obtained printed material (fabric subjected to transfer printing) are good. However, in Patent Document 1, an aspect in which the transfer-receiving medium is a fabric is not considered at all. In addition, Patent Document 2 describes transfer printing in which the transfer-receiving medium is a fabric, but studies on transferability, fastness to wet rubbing, and texture are insufficient.

Accordingly, an object of the present invention is to provide an adhesive ink, an ink set, and a transfer medium that are excellent in transferability to a fabric during transfer printing and can enhance fastness to wet rubbing and texture of an obtained printed material.

### Solution to Problem

As a result of intensive studies to achieve the object described above, the present inventors have found that by adjusting the balance between a glass transition temperature and a weight average molecular weight of a resin contained in an adhesive ink, it is possible to achieve excellent transferability to a fabric during transfer printing and enhance fastness to wet rubbing and texture of an obtained printed material, thereby completing the present invention.

That is, the present invention is as follows.
[1] An adhesive ink for inkjet printing to be use for transfer printing onto a fabric, the adhesive ink containing:
   a resin; a water-soluble organic solvent; and water, in which
   the resin has a glass transition temperature of 30°C or lower and a weight average molecular weight of 10000 to 700000.
[2] The adhesive ink according to [1], in which the resin includes at least one selected from the group consisting of an acrylic-based resin and a polyester-based resin.
[3] The adhesive ink according to [1] or [2], in which the resin is contained in the adhesive ink as an emulsion particle.
[4] The adhesive ink according to any one of [1] to [3], in which the fabric is formed of cotton, a polyester fiber, a polypropylene fiber, a nylon fiber, or a mixture thereof.
[5] An ink set including:
   the adhesive ink described in any one of [1] to [4]; and
   a colored ink containing a pigment and a resin.
[6] The ink set according to [5], in which the resin contained in the adhesive ink includes at least one selected from the group consisting of an acrylic-based resin and a polyester-based resin, and
   the resin contained in the colored ink includes at least one selected from the group consisting of an acrylic-based resin and a polyester-based resin.
[7] A transfer medium, in which the adhesive ink described in any one of [1] to [4] is printed on a transfer base material with or without a colored ink layer interposed between the adhesive ink and the transfer base medium, the colored ink layer being formed of a colored ink containing a pigment and a resin.
[8] The transfer medium according to [7], in which the transfer base material is a plastic film or paper.
[9] The transfer medium according to [7] or [8], further including an ink-receiving layer on a surface of the transfer base material, the surface being a surface on which the adhesive ink is printed.
[10] A printed material obtained by transfer-printing using the adhesive ink described in any one of [1] to [4].
[11] A method for producing a transfer medium for transfer printing onto a fabric, the method including:
   a step 3 of printing an adhesive ink by inkjet printing on a transfer base material or on a colored ink layer laminated on a transfer base material; and
   a step 4 of drying the adhesive ink, in which
   the adhesive ink used in the step 3 contains a resin, a water-soluble organic solvent, and water, and the resin has a glass transition temperature of 30°C or lower and a weight average molecular weight of 10000 to 700000.
[12] The production method according to [11], in which the resin contained in the adhesive ink includes at least one selected from the group consisting of an acrylic-based resin and a polyester-based resin.
[13] The production method according to [11] or [12], in which
   the step 3 is a step of printing the adhesive ink by inkjet printing on the colored ink layer laminated on the transfer base material, and
   the colored ink layer is formed by a step 1 of printing a colored ink by inkjet printing on the transfer base material and a step 2 of drying the colored ink.
[14] The production method according to [13], in which the colored ink contains a pigment and a resin.
[15] The production method according to [14], in which
   the resin contained in the adhesive ink includes at least one selected from the group consisting of an acrylic-based resin and a polyester-based resin, and
   the resin contained in the colored ink includes at least one selected from the group consisting of an acrylic-based resin and a polyester-based resin.
[16] The production method according to any one of [13] to [15], in which the step 2 is a step of evaporating 20 to 80 mass% of 100 mass% of a component excluding a solid content of the colored ink.
[17] The production method according to any one of [11] to [16], in which a thickness of the adhesive ink is 0.5 to 200 µm after the step 4 of drying.
[18] The production method according to any one of [11] to [17], in which the resin contained in the adhesive ink is contained in the adhesive ink as an emulsion particle.
[19] The production method according to any one of [11] to [18], in which the transfer base material is a plastic film or paper.
[20] The production method according to any one of [11] to [19], in which the printing of the adhesive ink in the step 3 is performed on (I) an ink-receiving layer laminated on the transfer base material, or (II) a surface on the colored ink layer side of a laminate in which the transfer base material, the ink-receiving layer, and the colored ink layer are laminated in this order.
[21] A method for producing a printed material, the method including transfer-printing the transfer medium obtained by the production method described in any one of [11] to [20] onto a fabric.
[22] The production method according to [21], in which
   the transfer-printing includes a close contact step of bringing a surface of the transfer medium on which the adhesive ink is printed into close contact with the fabric in a state where the surface faces the fabric, and a step of peeling off the transfer base material from the fabric, and
   a close contact time in the close contact step is 30 seconds or shorter.
[23] The production method according to [21] or [22], in which the fabric is formed of cotton, a polyester fiber, a polypropylene fiber, a nylon fiber, or a mixture thereof.

### Advantageous Effects of Invention

According to the present invention, it is possible to provide an adhesive ink that is excellent in transferability onto a fabric during transfer printing and can enhance fastness to wet rubbing and texture of an obtained printed material.

### Brief Description of Drawings

FIG. 1 is a schematic cross-sectional view illustrating an example of a laminated structure of a transfer medium in the present invention.
FIG. 2 is a schematic cross-sectional view illustrating another example of the laminated structure of the transfer medium in the present invention.
FIG. 3 is a schematic cross-sectional view illustrating still another example of the laminated structure of the transfer medium in the present invention.
FIG. 4 is a schematic cross-sectional view illustrating an example of a laminated structure of a transfer medium and a fabric during transfer printing according to the present invention.

### Description of Embodiments

An embodiment of the present invention will be described below, but the present invention is not limited thereto. In the present specification, a numerical range described as "from A to B" means "A or more and B or less" unless otherwise specified. Furthermore, the term "(meth)acrylic acid" means acrylic acid or methacrylic acid, and the term "(meth)acrylate" means acrylate or methacrylate. The same applies to terms such as "(meth)acryloxy" and "(meth)acryloyl". In addition, the phrase "structural unit derived from" corresponds to a structure in which an ethylenically unsaturated double bonds included in each monomer component is opened (a structure in which a double bond (C=C) becomes a single bond (-C-C-)).

### 1. Adhesive ink

An adhesive ink of the present invention is an adhesive ink for inkjet printing to be used for transfer printing onto a fabric, the adhesive ink containing a resin, a water-soluble organic solvent, and water, in which the resin has a glass transition temperature of 30°C or lower and a weight average molecular weight of 10000 to 700000. The adhesive ink of the present invention may contain another component as necessary in addition to the above-described components. Each component constituting the adhesive ink of the present invention will be described.

### Resin

The adhesive ink of the present invention contains a resin. A single type of a resin may be used alone, or two or more types of resins may be used in combination.

The glass transition temperature (Tg) of the resin included in the adhesive ink of the present invention is 30°C or lower, preferably 20°C or lower, more preferably 15°C or lower, and still more preferably 10°C or lower. When the Tg of the resin is adjusted to fall within the above range, texture of the obtained printed material is excellent. In addition, when the weight average molecular weight of the resin is adjusted to 10000 to 700000 while the Tg of the resin is adjusted to fall within the above range, transferability during transfer printing and fastness to wet rubbing of the obtained printed material are excellent. The lower limit of the Tg of the resin is, for example, -50°C or higher, preferably -30°C or higher, more preferably -20°C or higher, and still more preferably -10°C or higher. The transfer medium may be wound in a roll shape and stored, and in this case, blocking due to the adhesive ink may become a problem. When the lower limit of the Tg of the resin is adjusted to fall within the above range, such blocking can be suppressed.

That is, the Tg of the resin is preferably from -50 to 30°C, more preferably from -30 to 20°C, still more preferably from -20 to 15°C, and particularly preferably from -10 to 10°C.

The Tg of the resin can be determined by differential scanning calorimetry (DSC). Specifically, for example, using a differential scanning calorimeter ("DSC 3500" available from NETZSCH), the resin is heated and cooled following steps described below to create a DSC curve, and a midpoint glass transition temperature determined from the DSC curve at the time of a second heating is taken as the glass transition temperature (Tg) of the resin.
(Step 1) The temperature is raised from -50°C to 150°C at a rate of 10°C/min and held at 150°C for 5 minutes.
(Step 2) The temperature is decreased from 150°C to -50°C at a rate of 10°C/min and held at -50°C for 5 minutes.
(Step 3) The temperature is raised from -50°C to 150°C at a rate of 10°C/min.

Note that when the resin has a core-shell structure or the like, a plurality of glass transition temperatures may be observed. In this case, one of the glass transition temperatures may satisfy the above range, but it is preferable that all the glass transition temperatures satisfy the above range.

In addition, in a case where two or more types of resins are used, it is preferable that the Tg of a resin being the main component satisfies the above range, and it is more preferable that the Tg of each resin is within the above range. Note that the resin being the main component refers to a resin that accounts for preferably 50 mass% or more, more preferably 60 mass% or more, still more preferably 80 mass% or more, and particularly preferably 90 mass% or more, in 100 mass% of the total of the resins contained in the adhesive ink.

The weight average molecular weight of the resin contained in the adhesive ink of the present invention is 10000 or more, and preferably 20000 or more, and may be 30000 or more or 50000 or more. When the weight average molecular weight of the resin is adjusted to fall within the above range, it is possible to prevent the adhesive ink from flowing after printing. In addition, the weight average molecular weight of the resin is 700000 or less, preferably 500000 or less, and more preferably 400000 or less, and may be 350000 or less or 300000 or less. When the Tg of the resin is adjusted to 30°C or lower while the weight average molecular weight of the resin is adjusted to fall within the above range, transferability during transfer printing and fastness to wet rubbing of the obtained printed material are excellent.

That is, the weight average molecular weight of the resin is from 10000 to 700000, preferably from 20000 to 500000, and more preferably from 20000 to 400000, and may be from 30000 to 350000 or from 50000 to 300000.

The weight average molecular weight of the resin can be calculated by a standard polystyrene conversion method using gel permeation chromatography (GPC). Specifically, for example, the weight average molecular weight (in terms of polystyrene) can be calculated from a chart created using gel permeation chromatography (available from Tosoh Corporation, product number: HLC-8320GPC, column: TSK-GEL SuperMultipore HZ, eluent: THF) with a resin solution as a sample, in which the resin is dissolved in tetrahydrofuran (THF) to reach a concentration of 0.2 mass%, and a calibration curve created using standard polystyrene available from Tosoh Corporation.

In a case where two or more types of resins are used, the weight average molecular weight of the resin mixture may satisfy the above range, but it is preferable that the weight average molecular weight of each resin is within the above range.

The type of the resin contained in the adhesive ink of the present invention is not particularly limited, and examples thereof include a vinyl-based resin, an acrylic-based resin, a polyester-based resin, an olefin-based resin, a urethane-based resin, a fluorine-based resin, a silicone-based resin, an epoxy-based resin, a phenoxy-based resin, a phenol-based resin, and a xylene-based resin. Among them, the acrylic-based resin and/or the polyester-based resin is preferable.

In particular, from the viewpoint of suppressing yellowing of an obtained adhesive ink layer, it is preferable to use the acrylic-based resin as the resin. In production of a transfer medium or a printed material, the adhesive ink may be heated as described below, and the heating may cause yellowing of the obtained adhesive ink layer. In some cases, suppression of such yellowing is required to enhance design characteristics of an obtained printed material. The yellowing can be suppressed by using the acrylic-based resin as the resin.

The acrylic-based resin is a resin having a structural unit derived from a (meth)acrylic-based monomer. A content of the structural unit derived from the (meth)acrylic-based monomer is preferably 20 mass% or more, more preferably 30 mass% or more, and still more preferably 40 mass% or more, and may be 70 or 85 mass% or more, may be 100 mass%, and may be 90 mass% or less, relative to a total of 100 mass% of structural units derived from all monomer components constituting the acrylic-based resin. That is, the content is preferably from 20 to 100 mass%, more preferably from 30 to 100 mass%, and still more preferably from 40 to 100 mass%, and may be from 70 to 100 mass%, or from 85 to 90 mass%. When the content of the structural unit derived from the (meth)acrylic-based monomer is adjusted to fall within the above range, there is a tendency that the fastness to wet rubbing of the obtained printed material is further improved and yellowing of the adhesive ink layer in the printed material is further suppressed.

Examples of the (meth)acrylic-based monomer include a monofunctional (meth)acrylate and a polyfunctional (meth)acrylate.

Examples of the monofunctional (meth)acrylate include:
(meth)acrylic acid and a salt of (meth)acrylic acid (hereinafter, collectively referred to as (meth)acrylic acid (salt));
an alkyl (meth)acrylate such as a linear alkyl (meth)acrylate (such as methyl (meth)acrylate, ethyl (meth)acrylate, n-propyl (meth)acrylate, isopropyl (meth)acrylate, n-butyl (meth)acrylate, isobutyl (meth)acrylate, tert-butyl (meth)acrylate, sec-butyl (meth)acrylate, 2-ethylhexyl (meth)acrylate, n-octyl (meth)acrylate, 2-octyl (meth)acrylate, tridecyl (meth)acrylate, n-lauryl (meth)acrylate, dodecyl (meth)acrylate, stearyl (meth)acrylate), and a cyclic alkyl (meth)acrylate (such as cyclohexyl (meth)acrylate, isobornyl (meth)acrylate);
a fluoroalkyl (meth)acrylate such as trifluoroethyl (meth)acrylate, tetrafluoropropyl (meth)acrylate, and octafluoropentyl (meth)acrylate;
an aryl (meth)acrylate such as phenyl (meth)acrylate and naphthyl (meth)acrylate;
an aralkyl (meth)acrylate such as benzyl (meth)acrylate, phenylethyl (meth)acrylate, methylbenzyl (meth)acrylate, and naphthylmethyl (meth)acrylate;
a hydroxyalkyl (meth)acrylate such as 2-hydroxyethyl (meth)acrylate, 2-hydroxypropyl (meth)acrylate, 3-hydroxypropyl (meth)acrylate, 2-hydroxybutyl (meth)acrylate, and 4-hydroxybutyl (meth)acrylate;
an epoxy group-containing (meth)acrylate such as glycidyl (meth)acrylate and α-methylglycidyl (meth)acrylate;
an alkoxyalkyl group-containing (meth)acrylate such as methoxyethyl (meth)acrylate, methoxybutyl (meth)acrylate, ethoxybutyl (meth)acrylate, and trimethylolpropane tripropoxy (meth)acrylate;
a silyl group-containing (meth)acrylate such as γ-(meth)acryloyloxypropyltrimethoxysilane, γ-(meth)acryloyloxypropylhydroxysilane, and γ-(meth)acryloyloxypropylmethylhydroxysilane;
a carbonyl group-containing (meth)acrylate such as (meth)acryloxyalkyl propenal, acetonyl (meth)acrylate, diacetone (meth)acrylate, 2-hydroxypropyl (meth)acrylate acetyl acetate, butanediol-1,4-acrylate acetyl acetate, and 2-(acetoacetoxy) ethyl (meth)acrylate;
an aziridinyl group-containing (meth)acrylate such as (meth)acryloylaziridine and 2-aziridinylethyl (meth)acrylate;
an oxo group-containing (meth)acrylate such as ethylene glycol (meth)acrylate, ethylene glycol methoxy (meth)acrylate, and a (di)ethylene glycol (methoxy) (meth)acrylate such as diethylene glycol (meth)acrylate and diethylene glycol methoxy (meth)acrylate; and a
piperidine group-containing (meth)acrylate such as 4-(meth)acryloyloxy-2,2,6,6-tetramethylpiperidine and 4-(meth)acryloyloxy-1,2,2,6,6-pentamethylpiperidine, and one type or two or more types thereof can be selected and used.

Examples of the salt of (meth)acrylic acid include an alkali metal salt of (meth)acrylic acid and an ammonium salt of (meth)acrylic acid.

Examples of the alkali metal constituting the alkali metal salt include lithium, sodium, and potassium.

The ammonium constituting the ammonium salt may be NH₄⁺ or an organic ammonium. Examples of the organic ammonium include a tetraalkylammonium (preferably tetra-C₁₋₁₀ alkylammonium) such as tetramethylammonium and tetrabutylammonium; a trialkylammonium (preferably tri-C₁₋₁₀ alkylammonium) such as trimethylammonium, triethylammonium, and tributylammonium; a hydroxyalkylammonium (preferably mono-, di-, or tri-(hydroxy-C₁₋₁₀ alkyl)ammonium) such as monoethanolammonium, diethanolammonium, and triethanolammonium; and a dialkylmonohydroxyalkylammonium (preferably di-C₁₋₁₀alkylmono-(hydroxy-C₁₋₁₀ alkyl) ammonium) such as dimethylmonoethanolammonium.

Among them, the monofunctional (meth)acrylate preferably includes (meth)acrylic acid (salt) and/or an alkyl (meth)acrylate, more preferably includes at least the alkyl (meth)acrylate, and still more preferably includes (meth)acrylic acid (salt) and the alkyl (meth)acrylate.

A content of the structural unit derived from (meth)acrylic acid (salt) is preferably from 0 to 3 parts by mass, more preferably from 0 to 1 part by mass, still more preferably from 0 to 0.5 parts by mass, yet still more preferably from 0.1 to 0.5 parts by mass, and particularly preferably from 0.3 to 0.5 parts by mass, relative to 100 parts by mass of the structural unit derived from the alkyl (meth)acrylate. When the content of the structural unit derived from (meth)acrylic acid (salt) is adjusted to fall within the above range, fastness to washing of the obtained printed material tends to be enhanced.

The alkyl (meth)acrylate preferably includes an alkyl (meth)acrylate having an alkyl group with 1 to 18 carbon atoms (hereinafter, referred to as C₁₋₁₈ alkyl (meth)acrylate), and more preferably includes a C₄₋₁₂ alkyl (meth)acrylate. It is also preferable to use two or more types of alkyl (meth)acrylates having different numbers of carbon atoms in combination. For example, C₁₋₃ alkyl (meth)acrylate and C₄₋₁₈ alkyl (meth)acrylate may be used in combination, C₄₋₆ alkyl (meth)acrylate and C₇₋₁₈ alkyl (meth)acrylate may be used in combination, or C₁₋₃ alkyl (meth)acrylate, C₄₋₆ alkyl (meth)acrylate, and C₇₋₁₈ alkyl (meth)acrylate may be used in combination.

A content of the structural unit derived from monofunctional (meth)acrylate (preferably the total content of the structural unit derived from (meth)acrylic acid (salt) and the structural unit derived from alkyl (meth)acrylate) is preferably 20 mass% or more, more preferably 30 mass% or more, and still more preferably 40 mass% or more, and may be 70 mass% or more, or 80 mass% or more, and may be 100 mass%, and may be 90 mass% or less, relative to a total of 100 mass% of structural units derived from all monomer components constituting the acrylic-based resin. That is, the content is preferably from 20 to 100 mass%, more preferably from 30 to 100 mass%, and still more preferably from 40 to 100 mass%, and may be from 70 to 100 mass% or from 80 to 90 mass%.

Examples of the polyfunctional (meth)acrylate include:
a di(meth)acrylate of a polyhydric alcohol having 1 to 10 carbon atoms such as ethylene glycol di(meth)acrylate, diethylene glycol di(meth)acrylate, propylene glycol di(meth)acrylate, dipropylene glycol di(meth)acrylate, 1,3-butanediol di(meth)acrylate, 1,4-butanediol di(meth)acrylate, 1,6-hexanediol di(meth)acrylate, ethylene oxide-modified 1,6-hexanediol di(meth)acrylate, 1,9-nonanediol di(meth)acrylate, and propylene oxide-modified neopentyl glycol di(meth)acrylate;
a polyalkylene glycol di(meth)acrylate in which from 2 to 50 moles of alkylene oxide groups having 2 to 4 carbon atoms are added, such as polyethylene glycol di(meth)acrylate in which 2 to 50 moles of ethylene oxide are added, polypropylene glycol di(meth)acrylate in which from 2 to 50 moles of propylene oxide are added, and tripropylene glycol di(meth)acrylate;
a tri(meth)acrylate of a polyhydric alcohol having 1 to 10 carbon atoms such as ethoxylated glycerin tri(meth)acrylate, propylene oxide-modified glycerol tri(meth)acrylate, ethylene oxide-modified trimethylolpropane tri(meth)acrylate, trimethylolpropane tri(meth)acrylate, pentaerythritol monohydroxy tri(meth)acrylate, and trimethylolpropane triethoxy tri(meth)acrylate;
a tetra(meth)acrylate of a polyhydric alcohol having 1 to 10 carbon atoms such as pentaerythritol tetra(meth)acrylate, dipentaerythritol tetra(meth)acrylate, and ditrimethylolpropane tetra(meth)acrylate;
a penta(meth)acrylate of polyhydric alcohol having 1 to 10 carbon atoms, such as pentaerythritol penta(meth)acrylate and dipentaerythritol (monohydroxy) penta(meth)acrylate;
a hexa(meth)acrylate of a polyhydric alcohol having 1 to 10 carbon atoms such as pentaerythritol hexa(meth)acrylate;
an epoxy group-containing (meth)acrylate such as bisphenol A di(meth)acrylate, 2-(2'-vinyloxyethoxyethyl) (meth)acrylate, and epoxy (meth)acrylate; and
a polyfunctional (meth)acrylate such as urethane (meth)acrylate, and one type or two or more types thereof can be selected and used.

A content of the structural unit derived from the polyfunctional (meth)acrylate is preferably 10 mass% or less, more preferably 5 mass% or less, and still more preferably 1 mass% or less, relative to a total of 100 mass% of structural units derived from all monomer components constituting the acrylic-based resin.

The acrylic-based resin preferably has a structural unit derived from an acid group-containing monomer. When the acrylic-based resin includes the structural unit derived from an acid group-containing monomer, stability of the acrylic-based resin is favorable. The acrylic-based resin may have a single type of the structural unit derived from the acid group-containing monomer, or may have two or more types thereof.

The acid group-containing monomer may be a monomer having at least one acid group and at least one polymerizable unsaturated group in the molecule. Examples of the acid group include a sulfo group, a carboxy group, and a salt thereof, and a carboxy group or a salt thereof is preferable. The acid group-containing monomer may be the above-described (meth)acrylic acid (salt), or may be another acid group-containing monomer. Specific examples of the acid group-containing monomer include: an unsaturated monocarboxylic acid such as (meth)acrylic acid, cinnamic acid, and crotonic acid, or a salt thereof; an unsaturated dicarboxylic acid such as maleic acid, fumaric acid, itaconic acid, and citraconic acid, or a salt thereof; a monoester of an unsaturated dicarboxylic acid such as monomethyl maleate, monobutyl maleate, monomethyl itaconate, and monobutyl itaconate, or a salt thereof; an anhydride of an unsaturated dicarboxylic acid such as maleic anhydride; 2-acryloyloxyethyl succinate, 2-acryloyloxyethyl phthalate, and 2-acryloyloxyethyl hexahydrophthalate. Examples of the salt include an alkali metal salt or an ammonium salt, and specific examples of the alkali metal atom or ammonium constituting the salt are the same as those described above. Among these, as the acid group-containing monomer, an unsaturated monocarboxylic acid and/or a salt thereof are preferable, and (meth)acrylic acid (salt) is more preferable.

In a case where the acrylic-based resin has the structural unit derived from the acid group-containing monomer,a content of the structural unit derived from the acid group-containing monomer (preferably, a content of the structural unit derived from (meth)acrylic acid (salt)) is preferably 0.1 mass% or more, more preferably 0.3 mass% or more, still more preferably 0.5 mass% or more, and yet still more preferably 1.0 mass% or more, and is preferably 5 mass% or less, more preferably 4 mass% or less, and still more preferably 3 mass% or less, relative to a total of 100 mass% of structural units derived from all monomer components constituting the acrylic-based resin. That is, the content is preferably from 0.1 to 5 mass%, more preferably from 0.3 to 4 mass%, still more preferably from 0.5 to 3 mass%, and yet still more preferably from 1.0 to 3 mass%.

Note that from the viewpoint of enhancing fastness to washing of the obtained printed material, the content of the structural unit derived from the acid group-containing monomer (preferably, the content of the structural unit derived from (meth)acrylic acid (salt)) is preferably from 0 to 3 mass%, more preferably from 0 to 1 mass%, still more preferably from 0 to 0.5 mass%, yet still more preferably from 0.1 to 0.5 mass%, and particularly preferably from 0.3 to 0.5 mass%, relative to a total of 100 mass% of structural units derived from all monomer components constituting the acrylic-based resin.

The acrylic-based resin may further have a structural unit derived from a styrene-based monomer. A total content of the structural unit derived from the (meth)acrylic-based monomer and the structural unit derived from the styrene-based monomer (preferably, a total content of the structural unit derived from (meth)acrylic acid (salt), the structural unit derived from alkyl (meth)acrylate, and the structure derived from the styrene-based monomer) is preferably 50 mass% or more, more preferably 80 mass% or more, and still more preferably 95 mass% or more, and may be 100 mass%, relative to a total of 100 mass% of structural units derived from all monomer components constituting the acrylic-based resin.

Examples of the styrene-based monomer include styrene, α-methylstyrene, p-methylstyrene, tert-methylstyrene, chlorostyrene, vinyltoluene, 2-styrylethyltrimethoxysilane, and divinylbenzene, and one type or two or more types can be selected and used. In the styrene-based monomer, a functional group such as an alkyl group such as a methyl group or a tert-butyl group, a nitro group, a nitrile group, an alkoxyl group, an acyl group, a sulfone group, a hydroxyl group, or a halogen atom may be present in a benzene ring constituting the styrene-based monomer. Among the styrene-based monomers, styrene is preferable from the viewpoint of enhancing water resistance.

A content of the structural unit derived from the styrene-based monomer may be, for example, 10 mass% or more, and 30 mass% or more, and is preferably 80 mass% or less, more preferably 70 mass% or less, and still more preferably 60 mass% or less, relative to a total of 100 mass% of structural units derived from all monomer components constituting the acrylic-based resin. That is, the content is preferably from 0 to 80 mass%, and may be from 10 to 70 mass%, or from 30 to 60 mass%.

In particular, the acrylic-based resin preferably has the structural unit derived from the styrene-based monomer and/or a C₁₋₃ chain alkyl methacrylate and a structural unit derived from a C₄₋₁₂ chain alkyl acrylate, and more preferably has a structural unit derived from a C₁₋₃ chain alkyl methacrylate and a structural unit derived from a C₄₋₁₂ chain alkyl acrylate. In addition to these structural units, a structural unit derived from the acid group-containing monomer (preferably (meth)acrylic acid (salt)) is more preferably included.

A total content of the structural units derived from the styrene-based monomer, the C₁₋₃ chain alkyl methacrylate, the C₄₋₁₂ chain alkyl acrylate, and the acid group-containing monomer is preferably 60 mass% or more, more preferably 80 mass% or more, and still more preferably 95 mass% or more, and may be 100 mass%, relative to 100 mass% of structural units derived from all monomer components constituting the acrylic-based resin.

A content of the structural unit derived from the C₄₋₁₂ chain alkyl acrylate relative to a total of 100 mass% of structural units derived from all monomer components constituting the acrylic-based resin may be appropriately adjusted depending on a target Tg, but is preferably from 20 to 90 mass%, more preferably from 30 to 75 mass%, and still more preferably from 40 to 60 mass%.

A total content of the structural units derived from the styrene-based monomer and the C₁₋₃ chain alkyl methacrylate is preferably from 20 to 200 parts by mass, more preferably from 50 to 150 parts by mass, and still more preferably from 80 to 120 parts by mass, relative to 100 parts by mass of the structural unit derived from the C₄₋₁₂ chain alkyl acrylate.

A content of the structural unit derived from the acid group-containing monomer is preferably from 0 to 3 parts by mass, more preferably from 0.1 to 1 part by mass, and still more preferably from 0.3 to 0.5 parts by mass, relative to 100 parts by mass of a total of the structural units derived from the styrene-based monomer, the C₁₋₃ chain alkyl methacrylate, and the C₄₋₁₂ chain alkyl acrylate.

The acrylic-based resin may further have one type or two or more types of structural units derived from a monomer other than the (meth)acrylic-based monomer, the acid group-containing monomer, and the styrene-based monomer (hereinafter, sometimes referred to as "the other monomer").

The other monomer is not particularly limited as long as it has at least one polymerizable unsaturated group in the molecule, and examples thereof include: an addition - polymerizable oxazoline such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline; a vinyl-based monomer such as vinyl acetate, vinyl chloride, and vinyl benzoate; acrylonitrile; a (meth)acrylamide-based monomer such as (meth)acrylamide, N-monomethyl (meth)acrylamide, N-monoethyl (meth)acrylamide, and N,N-dimethyl (meth)acrylamide; and an olefin-based monomer such as ethylene and propylene.

The acrylic-based resin can be produced by a known polymerization method, and examples thereof include a solution polymerization method, a bulk polymerization method, a suspension polymerization method, and an emulsion polymerization method. Among these, an emulsion polymerization method is preferable. That is, the acrylic-based resin is preferably produced by emulsion polymerization of the above-described monomer components ((meth)acrylic-based monomer, and as necessary, styrene-based monomer, acid group-containing monomer, and the other monomer) in an aqueous solvent in the presence of an emulsifier and a polymerization initiator. Note that as used in the present specification, the term "monomer component" refers to a compound having at least one polymerizable unsaturated group in the molecule other than a reactive emulsifier described below. As specific means and conditions for performing emulsion polymerization, means and techniques in a known emulsion polymerization method can be appropriately selected and adopted.

The emulsifier used in the above-described emulsion polymerization is not particularly limited, but a known emulsifier can be used, such as a nonionic emulsifier, an anionic emulsifier, a cationic emulsifier, an amphoteric emulsifier, and a macromolecular emulsifier. A single type of these emulsifiers may be used alone, or two or more types thereof may be used in combination. Among the above emulsifiers, a nonionic emulsifier and/or an anionic emulsifier is preferable. An emulsifier containing a polymerizable group in the molecule (hereinafter, sometimes referred to as a reactive emulsifier) is also preferable. Among the above emulsifiers, a nonionic emulsifier containing a polymerizable group or an anionic emulsifier containing a polymerizable group is particularly preferable. An amount of the reactive emulsifier is not particularly limited, but is, for example, from 10 to 80 mass%, preferably from 30 to 60 mass%, in 100 mass% of emulsifiers used in the emulsion polymerization.

Examples of the anionic emulsifier include, but are not limited to, an alkylsulfate salt such as ammonium dodecylsulfate and sodium dodecylsulfate; an alkylsulfonate salt such as ammonium dodecylsulfonate, sodium dodecylsulfonate, and sodium alkyl diphenyl ether disulfonate; an alkylarylsulfonate salt such as ammonium dodecylbenzenesulfonate and sodium dodecylnaphthalenesulfonate; a polyoxyethylene alkylsulfonate salt; a polyoxyethylene alkyl ether sulfate salt; a polyoxyethylene alkyl aryl ether sulfate salt; a dialkyl sulfosuccinate salt; an arylsulfonic acid-formalin condensate; a fatty acid salt such as ammonium laurate and sodium stearate; an allyl group-containing sulfate ester or a salt thereof, such as a bis(polyoxyethylene polycyclic phenyl ether) methacrylate sulfonate salt, a propenyl-alkylsulfosuccinate ester salt, a (meth)acrylic acid polyoxyethylene sulfonate salt, a (meth)acrylic acid polyoxyethylene phosphonate salt, and a sulfonate salt of allyloxymethyl alkyloxy polyoxyethylene; a sulfate ester salt of allyloxymethyl alkoxyethyl polyoxyethylene; and a polyoxyalkylene alkenyl ether sulfate ammonium salt.

Examples of the nonionic emulsifier include, but are not limited to, a polyoxyethylene alkyl ether, a polyoxyethylene alkyl aryl ether, a condensate of polyethylene glycol and polypropylene glycol, a sorbitan fatty acid ester, a polyoxyethylene sorbitan fatty acid ester, s fatty acid monoglyceride, a condensate of ethylene oxide and aliphatic amine, and a polyoxyalkylene alkenyl ether.

Examples of the polymer emulsifier include, but are not limited to, a poly(meth)acrylate salt such as sodium polyacrylate; polyvinyl alcohol; polyvinyl pyrrolidone; a polyhydroxyalkyl (meth)acrylate such as polyhydroxyethyl acrylate; and a copolymer containing, as a copolymerization component, one or more of monomers constituting these polymers.

As used herein, the term "reactive emulsifier" refers to a compound having a polymerizable unsaturated group, a hydrophilic group, and a hydrophobic group, and may have one or two or more polymerizable unsaturated groups.

The polymerizable unsaturated group is preferably a group having an ethylenically unsaturated double bond, and specific examples thereof include a (meth)acryloyl group, a vinyl group, an allyl group, and a styryl group.

Examples of the hydrophilic group include a group known as an emulsifier (surfactant), and preferred examples thereof include an anionic group such as a sulfonate group, a phosphate group, a sulfate ester residue, and a phosphate ester residue; and a nonionic group such as a polyether group and an ester group.

Examples of the hydrophobic group include a group known as an emulsifier (surfactant), and preferred examples thereof include an alkyl group (particularly, an alkyl group having from around 8 to around 40 carbons), an aryl group-containing hydrocarbon group (particularly, a hydrocarbon group having from around 12 to around 40 carbons and having a phenyl group), and a polycyclic phenyl group.

Specific examples of the reactive emulsifier include, but are not limited to,
an anionic emulsifier having a polymerizable group, such as a propenyl-alkylsulfosuccinate ester salt, a (meth)acrylic acid polyoxyethylene sulfonate salt, a (meth)acrylic acid polyoxyethylene phosphonate salt (for example, trade name: Eleminol RS-30, available from Sanyo Chemical Industries, Ltd.), a polyoxyethylene alkyl propenyl phenyl ether sulfonate salt (for example, trade name: AQUALON HS-10, available from DKS Co., Ltd.), a sulfonate salt of allyloxymethyl alkyloxy polyoxyethylene (for example, trade name: AQUALON KH-10, available from DKS Co., Ltd.), polyoxyethylene styrenated propenyl phenyl ether ammonium sulfate (for example, trade name: AQUALON AR-10, available from DKS Co., Ltd.), a sulfonate salt of allyloxymethyl nonylphenoxyethyl hydroxypolyoxyethylene (for example, trade name: ADEKA REASOAP SE-10, available from ADEKA CORPORATION), an allyloxymethyl alkoxyethyl hydroxypolyoxyethylene sulfonate ester salt (for example, trade name: ADEKA REASOAP SR-10, SR-30, available from ADEKA CORPORATION), and a bis(polyoxyethylene polycyclic phenyl ether) methacrylated sulfonate salt (for example, trade name: Antox MS-60, available from Nippon Nyukazai Co., Ltd.); and
a nonionic emulsifier having a polymerizable group, such as a polyoxyethylene styrenated propenyl phenyl ether (for example, trade name: AQUALON AN-10, available from DKS Co., Ltd.), an allyloxymethyl alkoxyethyl hydroxypolyoxyethylene (for example, trade name: ADEKA REASOAP ER-20, available from ADEKA CORPORATION), a polyoxyethylene alkyl propenyl phenyl ether (for example, trade name: AQUALON RN-20, available from DKS Co., Ltd.), and an allyloxymethyl nonylphenoxyethyl hydroxypolyoxyethylene (for example, trade name: ADEKA REASOAP NE-10, available from ADEKA CORPORATION).

An amount of the emulsifier used is not limited, and for example, preferably from 0.1 to 10 parts by mass, more preferably from 0.5 to 7 parts by mass, and still more preferably from 1.0 to 5 parts by mass, relative to 100 parts by mass of the monomer components. If necessary, a protective colloid may be used alone or in combination with the emulsifier.

In a case where a reactive emulsifier is used as the emulsifier, the polymerizable group of the reactive emulsifier reacts at the time of polymerization, resulting in a resin having a structural unit derived from the reactive emulsifier. A content of the structural unit derived from the reactive emulsifier in the polymer is preferably from 0.1 to 8 parts by mass, more preferably from 0.5 to 5 parts by mass, and still more preferably from 1.0 to 3 parts by mass, relative to 100 parts by mass of the structural units derived from the monomer components.

The polymerization initiator used during the emulsion polymerization is not limited, and examples thereof include, but are not limited to, an azo-based polymerization initiator, such as azobisisobutyronitrile, 2,2-azobis(2-methylbutyronitrile), 2,2-azobis(2,4-dimethylvaleronitrile), 2,2-azobis(2-diaminopropane) hydrochloride, 4,4-azobis(4-cyanovaleric acid), and 2,2-azobis(2-methylpropionamidine); a persulfate salt such as ammonium persulfate and potassium persulfate; and a peroxide-based polymerization initiator such as hydrogen peroxide, benzoyl peroxide, p-chlorobenzoyl peroxide, lauroyl peroxide, and ammonium peroxide. A single type of these polymerization initiators may be used alone, or two or more types thereof may be used in combination.

An amount of the polymerization initiator used in the emulsion polymerization is preferably from 0.01 to 3 parts by mass, more preferably from 0.05 to 2 parts by mass, and still more preferably from 0.1 to 1 part by mass, per 100 parts by mass of the monomer components. Note that if an increase in polymerization rate or a decrease in reaction temperature is necessary, a reducing agent such as a soluble sulfite salt (for example, sodium sulfite) or ascorbic acid, or a metal compound that generates a heavy metal ion in water, such as ferrous sulfate, can be used as a redox-based initiator in combination with the polymerization initiator.

To adjust the weight average molecular weight of the resin to be obtained, the polymerization reaction may be performed in the presence of a chain transfer agent. Examples of the chain transfer agent include, but are not limited to, 2-ethylhexyl thioglycolate, tert-dodecyl mercaptan, n-octyl mercaptan, n-dodecyl mercaptan, mercaptoacetic acid, mercaptopropionic acid, 2-mercaptoethanol, α-methylstyrene, and α-methylstyrene dimer. A single type of these chain transfer agents may be used alone, or two or more types thereof may be used in combination. An amount of the chain transfer agent may be appropriately adjusted depending on the intended weight average molecular weight, but the amount is preferably from 0.01 to 10 parts by mass, and more preferably from 0.1 to 3 parts by mass, relative to 100 parts by mass of the monomer components.

Reaction temperature and Reaction time during the emulsion polymerization can be appropriately set in consideration of the weight average molecular weight of the resin to be produced, the blending proportions of the monomer components, the type of the polymerization initiator and the like, and the reaction temperature is, for example, from 0 to 100°C, preferably from 50 to 95°C, and more preferably from 60 to 90°C, and the reaction time is, for example, from 0.5 to 30 hours, preferably from 1 to 20 hours, and more preferably from 3 to 10 hours. Reaction pressure is also not particularly limited, and may be any of normal pressure (atmospheric pressure), reduced pressure, or increased pressure. The polymerization reaction is preferably performed in an atmosphere of an inert gas such as nitrogen gas.

Examples of the aqueous solvent used during the emulsion polymerization include water and a mixed solvent of water and a water-soluble organic solvent. The term "water-soluble organic solvent" refers to an organic solvent that dissolves in water at a concentration of 0.01 mass% or more at normal temperature and normal pressure. As used herein, the term "room temperature" means 25°C and the term "normal pressure" means 1 atm. A content of water in the aqueous solvent is preferably from 10 to 100 mass%, more preferably 25 mass% or more, still more preferably 60 mass% or more, and particularly preferably 90 mass% or more.

Examples of the water-soluble organic solvent include:
a lower alcohol (preferably, a C₁₋₄ alcohol) such as methyl alcohol, ethyl alcohol, n-propyl alcohol, isopropyl alcohol, n-butyl alcohol, and tert-butyl alcohol;
a dihydric alcohol (preferably a glycol) such as propylene glycol, 1,3-propanediol, dipropylene glycol, tripropylene glycol, ethylene glycol, diethylene glycol, triethylene glycol, and tetraethylene glycol;
a trihydric alcohol such as glycerin;
an ether of monoethylene glycol (preferably, a monoalkyl ether of monoethylene glycol), such as monoethylene glycol monomethyl ether, monoethylene glycol monoethyl ether, monoethylene glycol monopropyl ether, monoethylene glycol monoisopropyl ether, monoethylene glycol monobutyl ether, and monoethylene glycol monoisobutyl ether;
an ether of monopropylene glycol (preferably, a monoalkyl ether of monopropylene glycol), such as monopropylene glycol monomethyl ether, monopropylene glycol monoethyl ether, monopropylene glycol monopropyl ether, monopropylene glycol monoisopropyl ether, monopropylene glycol monobutyl ether, and monopropylene glycol monoisobutyl ether;
an ether of diethylene glycol (preferably, a monoalkyl ether of diethylene glycol), such as diethylene glycol monomethyl ether, diethylene glycol monoethyl ether, diethylene glycol monopropyl ether, diethylene glycol monoisopropyl ether, diethylene glycol monobutyl ether, and diethylene glycol monoisobutyl ether;
an ether of dipropylene glycol (preferably, a monoalkyl ether of dipropylene glycol), such as dipropylene glycol monomethyl ether, dipropylene glycol monoethyl ether, dipropylene glycol monopropyl ether, dipropylene glycol monoisopropyl ether, dipropylene glycol monobutyl ether, and dipropylene glycol monoisobutyl ether;
an ether of polyethylene glycol (preferably, a monoalkyl ether of polyethylene glycol), such as a monomethyl ether of polyethylene glycol (number of moles of added EO = from 2 to 10, preferably from 2 to 4), a monoethyl ether of polyethylene glycol (number of moles of added EO = from 2 to 10, preferably from 2 to 4), a monopropyl ether of polyethylene glycol (number of moles of added EO = from 2 to 10, preferably from 2 to 4), a monoisopropyl ether of polyethylene glycol (number of moles of added EO = from 2 to 10, preferably from 2 to 4), a monobutyl ether of polyethylene glycol (number of moles of added EO = from 2 to 10, preferably from 2 to 4), and a monoisobutyl ether of polyethylene glycol (number of moles of added EO = from 2 to 10, preferably from 2 to 4);
an ether of polypropylene glycol (preferably, a monoalkyl ether of polypropylene glycol), such as a monomethyl ether of polypropylene glycol (number of moles of added PO = from 2 to 10, preferably from 2 to 4), a monoethyl ether of polypropylene glycol (number of moles of added PO = from 2 to 10, preferably from 2 to 4), a monopropyl ether of polypropylene glycol (number of moles of added PO = from 2 to 10, preferably from 2 to 4), a monoisopropyl ether of polypropylene glycol (number of moles of added PO = from 2 to 10, preferably from 2 to 4), a monobutyl ether of polypropylene glycol (number of moles of added PO = from 2 to 10, preferably from 2 to 4), and a monoisobutyl ether of polypropylene glycol (number of moles of added PO = from 2 to 10, preferably from 2 to 4);
a heterocyclic compound such as 2-pyrrolidone and N-methyl-2-pyrrolidone; and
a ketone such as acetone and methyl ethyl ketone.

Among these, propylene glycol, glycerin, diethylene glycol, triethylene glycol, diethylene glycol monoisopropyl ether, diethylene glycol monobutyl ether, diethylene glycol monoisobutyl ether, a monobutyl ethers of polyethylene glycol (number of moles of added EO = from 2 to 4), and 2-pyrrolidone are preferable. A single type of these water-soluble organic solvents may be used alone, or two or more types thereof may be used in combination.

An amount of the aqueous solvent used in the emulsion polymerization is not limited, but is preferably from 20 to 300 parts by mass, more preferably from 30 to 200 parts by mass, and even more preferably from 40 to 150 parts by mass, per 100 parts by mass of the monomer components.

Specific examples of the polymerization method in the emulsion polymerization include a polymerization method involving dropwise addition of the monomers, a polymerization method involving dropwise addition of a pre-emulsion, a seed polymerization method, and a multistage polymerization method.

As necessary, an additive such as a pH buffer or a chelating agent may be added in an appropriate amount in the reaction system of the emulsion polymerization. An amount of the additive varies depending on the type thereof and thus cannot be determined unconditionally, but is usually preferably from 0.01 to 5 parts by mass, and more preferably from 0.1 to 3 parts by mass, per 100 parts by mass of the monomer components.

Such an emulsion polymerization method produces an emulsion in which the acrylic-based resin is dispersed as an emulsion particle in an aqueous solvent.

The polyester-based resin is not particularly limited as long as it is a polymer having an ester bond in the main chain, but is preferably a polycondensate of an aromatic dicarboxylic acid and a diol compound.

Examples of the aromatic dicarboxylic acid include phthalic acid, isophthalic acid, and terephthalic acid.

Examples of the diol compound include: an aliphatic diol such as ethylene glycol, 1,2-propanediol, 1,3-propanediol, and neopentyl glycol; an aromatic alcohol such as an alkylene oxide adduct of bisphenol A such as polyoxypropylene-2,2-bis(4-hydroxyphenyl) propane and polyoxyethylene-2,2-bis(4-hydroxyphenyl) propane; and hydrogenated bisphenol A or an alkylene (having 2 to 4 carbon atoms) oxide (average number of moles added: from 1 to 16) adduct thereof.

An aliphatic polybasic acid may be added to the polyester-based resin for the purpose of improving fluidity. Examples of the aliphatic polybasic acid include: a saturated aliphatic dicarboxylic acid or an anhydride thereof such as succinic acid, succinic anhydride, glutaric acid, adipic acid, azelaic acid, sebacic acid, dodecanedioic acid, and 1,4-cyclohexanedicarboxylic acid; an unsaturated aliphatic dicarboxylic acid or an anhydride thereof such as fumaric acid, maleic acid, maleic anhydride, itaconic acid, itaconic anhydride, citraconic acid, and citraconic anhydride; and a tri- or higher-functional aliphatic carboxylic acid such as 1,2,3,4-butanetetracarboxylic acid.

As the polyester-based resin, an appropriately synthesized product may be used, or a commercially available product may be used. Examples of the commercially available product include Vylonal series (available from Toyobo Co., Ltd.) such as MD1335 and MD1480, and Elitel series (available from UNITIKA LTD.) such as KT-0507, KT-8904, KT-8701, and KT-9204.

A total content of the acrylic-based resin and the polyester-based resin in 100 mass% of the resin contained in the adhesive ink is preferably 50 mass% or more, more preferably 80 mass% or more, and still more preferably 90 mass% or more, and may be 100 mass%.

In addition, from the viewpoint of suppressing yellowing of the adhesive ink layer, the content of the acrylic-based resin in 100 mass% of the resin contained in the adhesive ink is preferably 65 mass% or more, more preferably 80 mass% or more, still more preferably 90 mass% or more, and particularly preferably 100 mass%.

When the resin is contained in the adhesive ink of the present invention, the resin is preferably added in the form of an emulsion, namely, the resin is preferably contained in the form of emulsion particles in the adhesive ink of the present invention.

The composition, physical properties, and the like of the resin constituting the emulsion particles are as described above.

A shape of the emulsion particles is not particularly limited, but is usually spherical. The shape can be measured using a transmission electron microscope or a scanning electron microscope. The emulsion particles may have a single-layer structure or a multilayer structure (such as a core-shell structure).

The average particle size (volume-based) of the emulsion particles is preferably 50 nm or more, more preferably 80 nm or more, and still more preferably 100 nm or more, and is preferably 500 nm or less, more preferably 350 nm or less, and still more preferably 300 nm or less. That is, the average particle size (volume-based) of the emulsion particles is preferably from 50 to 500 nm, more preferably from 80 to 350 nm, and still more preferably from 100 to 300 nm. When the average particle size of the emulsion particles is adjusted to fall within the above range, the emulsion particles can be easily blended at a high concentration while the viscosity of the adhesive ink is maintained in an appropriate range. Note that the average particle size of the emulsion particles may be a cumulant average particle size measured by a dynamic light scattering method as shown in the Examples described below.

A content of the resin (preferably the emulsion particles) in the adhesive ink is preferably 10 mass% or more, more preferably 15 mass% or more, and still more preferably 20 mass% or more, and is 35 mass% or less, preferably 30 mass% or less, and more preferably 25 mass% or less. That is, the content of the resin (preferably the emulsion particles) in the adhesive ink is, for example, from 10 to 35 mass%, preferably from 15 to 30 mass%, and more preferably from 20 to 25 mass%. When the content of the resin is adjusted to fall within the above range, the effect of the present invention can be further enhanced while maintaining the viscosity of the adhesive ink within an appropriate range.

### Solvent

The adhesive ink of the present invention contains water and a water-soluble organic solvent. These solvents act as a diluent to adjust the viscosity of the adhesive ink. A total content of water and the water-soluble organic solvent in the adhesive ink may be set depending on the desired viscosity of the adhesive ink, and is not particularly limited. However, the total content is, for example, from 40 to 90 mass%, preferably from 50 to 88 mass%, and more preferably from 55 to 85 mass%.

Examples of the water-soluble organic solvent include the same solvents as those described as the water-soluble organic solvent used in the emulsion polymerization method. When the adhesive ink contains the water-soluble organic solvent, moisture retention and compatibility with the resin can be enhanced. A single type of the water-soluble organic solvent may be used alone, or two or more types thereof may be used in combination. The content of the water-soluble organic solvent is preferably from 10 to 55 parts by mass, and more preferably from 15 to 45 parts by mass, relative to 100 parts by mass of water contained in the adhesive ink.

In particular, from the viewpoint of further enhancing moisture retention, the water-soluble organic solvent is preferably a water-soluble organic solvent having a boiling point of 150°C or higher, more preferably a water-soluble organic solvent having a boiling point of 180°C or higher, and still more preferably a water-soluble organic solvent having a boiling point of 200°C or higher. Examples of the water-soluble organic solvent having a boiling point of 150°C or higher include propylene glycol, diethylene glycol, triethylene glycol, and glycerin. A content of the water-soluble organic solvent that further enhances moisture retention is preferably from 10 to 50 parts by mass, and more preferably from 15 to 40 parts by mass, relative to 100 parts by mass of water contained in the adhesive ink.

From the viewpoint of further enhancing compatibility with the resin, a water-soluble organic solvent having a hydrophobic group (such as an alkyl group) and a hydroxyl group is preferable, and at least one selected from the group consisting of a monoalkyl ether of diethylene glycol, a monoalkyl ether of dipropylene glycol, a monoalkyl ether of a polyethylene glycol (number of moles of added EO = 2 to 10), and a monoalkyl ether of a polypropylene glycol (number of moles of added PO = from 2 to 10) is more preferable. Among these, at least one selected from the group consisting of diethylene glycol monoisopropyl ether, diethylene glycol monobutyl ether, diethylene glycol monoisobutyl ether, monobutyl ether of a polyethylene glycol (number of moles of added EO = from 2 to 4) (in particular, triethylene glycol monobutyl ether), and monomethyl ether of a polypropylene glycol (number of moles of added PO = from 2 to 10, preferably from 2 to 4) (in particular, tripropylene glycol monomethyl ether) is still more preferable. A content of the water-soluble organic solvent that further enhances compatibility is preferably from 1 to 15 parts by mass, and more preferably from 2 to 8 parts by mass, relative to 100 parts by mass of water contained in the adhesive ink.

A total content of the resin, water, and water-soluble organic solvent in the adhesive ink of the present invention is not particularly limited, but is, for example, 70 mass% or more, preferably 85 mass% or more, more preferably 90 mass% or more, and still more preferably 95 mass% or more, and may be 100 mass% or 99.5 mass% or less.

### Crosslinking agent

The adhesive ink of the present invention may further contain a crosslinking agent. It is considered that using a crosslinking agent results in the formation of a crosslinked structure due to interaction or a chemical reaction with the components, such as the resin, contained in the adhesive ink of the present invention, whereby a tough coating film can be formed. It is thus presumed that fastness to wet rubbing and fastness to washing (hereinafter, sometimes collectively referred to as fastness) of the obtained printed material are further improved.

Examples of the crosslinking agent include an isocyanate compound, an epoxy compound, a melamine compound, a metal chelate compound, an aziridine compound, a mercapto compound, and an oxazoline compound, and an oxazoline compound is preferable. A single type of the crosslinking agent may be used alone, or two or more types thereof may be used in combination.

The oxazoline compound as the crosslinking agent means a compound having two or more oxazoline groups in the molecule. Examples of the oxazoline compound include, but are not limited to, 2,2'-bis(2-oxazoline), 2,2'-methylene-bis(2-oxazoline), 2,2'-ethylene-bis(2-oxazoline), 2,2'-trimethylene-bis(2-oxazoline), 2,2'-tetramethylene-bis(2-oxazoline), 2,2'-hexamethylene-bis(2-oxazoline), 2,2'-octamethylene-bis(2-oxazoline), 2,2'-ethylene-bis(4,4'-dimethyl-2-oxazoline), 2,2'-p-phenylene-bis(2-oxazoline), 2,2'-m-phenylene-bis(2-oxazoline), 2,2'-m-phenylene-bis(4,4'-dimethyl-2-oxazoline), bis(2-oxazolinylcyclohexane) sulfide, bis(2-oxazolinylnorbornane) sulfide, and an oxazoline group-containing polymer.

Among the above oxazoline compounds, a water-soluble oxazoline compound is preferable, and an oxazoline group-containing polymer is preferable, from the viewpoint of excellent crosslinking performance. The oxazoline group-containing polymer can be produced by a known production method. Examples of the production method include a method of polymerizing one type or two or more types of addition-polymerizable oxazolines or monomer components containing an addition-polymerizable oxazoline, and a monomer copolymerizable with the addition-polymerizable oxazoline. The copolymerizable monomer is preferably a monomer that is copolymerizable with an addition-polymerizable oxazoline without having a functional group that reacts with an oxazoline group. For example, the monomer components can include a monomer that does not have a functional group that reacts with an oxazoline group. Examples thereof include a (meth)acrylic-based monomer such as an alkyl (meth)acrylate; a styrene-based monomer such as styrene, α-methylstyrene, and chloromethylstyrene; a vinyl-based monomer such as vinyl acetate, vinyl chloride, and vinyl benzoate; acrylonitrile; a (meth)acrylamide-based monomer such as acrylamide; and an olefin-based monomer such as ethylene and propylene.

Examples of the addition-polymerizable oxazoline include a compound having a polymerizable unsaturated group and an oxazoline group in the molecule, such as 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-methyl-2-oxazoline, and 2-isopropenyl-5-ethyl-2-oxazoline.

Among the oxazoline group-containing polymers, a water-soluble oxazoline group-containing polymer is preferable, and can be produced by the same method as the method for producing the oxazoline group-containing polymer. Examples of the water-soluble oxazoline group-containing polymer include a polymer that have an acrylic-based resin as a main chain and contain an oxazoline group in a side chain.

The oxazoline group-containing polymer to be used may be a commercially available product. Examples of the commercially available product include a water-soluble polymer available from Nippon Shokubai Co., Ltd. with a trade name of EPOCROS WS-500 or EPOCROS WS-700, and an emulsion-type polymer available from Nippon Shokubai Co., Ltd. with a trade name of EPOCROS K-2010, EPOCROS K-2020, or EPOCROS K-2030 . Among these, the water-soluble polymer available from Nippon Shokubai Co., Ltd. with a trade name of EPOCROS WS-500 or EPOCROS WS-700 is preferable.

A content of the crosslinking agent (preferably, the oxazoline compound) is not particularly limited, but is, for example, from 0 to 10 parts by mass, preferably from 0.05 to 10 parts by mass, more preferably from 0.1 to 8 parts by mass, and still more preferably from 0.2 to 5 parts by mass, relative to 100 parts by mass of the resin.

### Surfactant

The adhesive ink of the present invention may further contain a surfactant. Using the surfactant enables the surface tension to be adjusted to a level suitable for inkjet ejection.

The surfactant to be used is preferably, for example, an acetylene glycol-based surfactant, a silicone-based surfactant, or a fluorine-based surfactant.

As the acetylene glycol-based surfactant, a commercially available product may be used, and specific examples thereof include SURFYNOL series (available from Evonik Industries AG), Olfine series (available from Nissin Chemical Industry Co., Ltd.), and Acetylenol series (available from Kawaken Fine Chemicals Co., Ltd.).

As the silicone-based surfactant, a polyether-modified silicone-based surfactant is suitably used. As the silicone-based surfactant, a commercially available product may be used, and specific examples thereof include Silface series (available from Nissin Chemical Industry Co., Ltd.), KF series (available from Nissin Chemical Industry Co., Ltd.), and BYK-345, 347, 348, 349, 3450, 3451, 3455, and 3480 (available from BYK).

Examples of the fluorine-based surfactant include a perfluoroalkyl sulfonate compound, a perfluoroalkyl carboxylate compound, a perfluoroalkyl phosphorate ester compound, a perfluoroalkyl ethylene oxide adduct, and a polyoxyalkylene ether polymer compound having a perfluoroalkyl ether group in a side chain. As the fluorine-based surfactant, a commercially available product may be used, and specific examples thereof include Surflon series (available from AGC Seimi Chemical Co., Ltd.) and MEGAFAC F series (available from DIC Corporation).

A single type of these surfactants may be used alone, or two or more types thereof may be used in combination.

The surfactant is preferably an acetylene glycol-based surfactant or a silicone-based surfactant, more preferably a silicone-based surfactant, and still more preferably a polyether-modified silicone-based surfactant.

A content of the surfactant (when two or more types of surfactants are used, a total content thereof) is not particularly limited, but is preferably from 0.1 to 4 mass%, more preferably from 0.5 to 3 mass%, still more preferably from 1 to 2.5 mass%, and particularly preferably from 1 to 2 mass%, relative to 100 mass% of the adhesive ink of the present invention, from the viewpoint of ejection stability. The content may be from 0.01 to 2 mass%, or from 0.1 to 1 mass%.

Note that it is preferable to use two or more types of the surfactants from the viewpoint that the surface tension is more easily adjusted to be suitable for inkjet ejection.

In a case where two or more types of surfactants are used, a content of each surfactant is preferably from 0.05 to 2.5 mass%, more preferably from 0.2 to 2.0 mass%, and still more preferably from 0.4 to 1.5 mass%, relative to 100 mass% of the adhesive ink of the present invention.

In particular, it is preferable to use a silicone-based surfactant and an acetylene glycol-based surfactant in combination, and it is more preferable to use a polyether-modified silicone-based surfactant and an acetylene glycol-based surfactant in combination. Using them in combination enhances ejection stability of the adhesive ink.

In a case where the silicone-based surfactant and the acetylene glycol-based surfactant are used in combination, a mass ratio thereof (silicone-based surfactant/acetylene glycol-based surfactant) is preferably from 0.1 to 20, more preferably from 0.2 to 10, still more preferably from 0.5 to 4.5, particularly preferably from 0.7 to 3.0, and most preferably from 1.0 to 2.0. In particular, it is preferable to adjust the mass ratio between the polyether-modified silicone-based surfactant and the acetylene glycol-based surfactant (polyether-modified silicone-based surfactant/acetylene glycol-based surfactant) to fall within the above range.

### Color material

The adhesive ink of the present invention may further contain a color material such as a dye or a pigment. When the adhesive ink contains a color material, the adhesive ink can also function as a colored ink to be described below. Specifically, an intended pattern such as an image or a character can be formed only with the adhesive ink, or a white layer or the like serving as a background of a pattern formed of the colored ink layer can be formed. Thus, the number of times of printing of the colored ink can be reduced, or the step of printing the colored ink itself can be omitted. Note that from the viewpoint of making the obtained printed material particularly excellent in fastness, it is preferable that the adhesive ink of the present invention does not contain a color material.

The color material is preferably a pigment from the viewpoint of fastness. Examples of the pigment contained in the adhesive ink include those exemplified as the pigment contained in the colored ink to be described below, and preferred aspects thereof are also the same.

A content of the pigment is, for example, from 0 to 15 mass% or more in 100 mass% of the adhesive ink of the present invention. In particular, from the viewpoint of enhancing color developability and design characteristics after transfer, the content is preferably 1 mass% or more and more preferably 1.5 mass% or more, and may be 2 mass% or more. From the viewpoint of enhancing hot-melt properties and fastness, the content is preferably 10 mass% or less and more preferably 7 mass% or less, and may be 5 mass% or less or 3 mass% or less. That is, the content of the pigment is preferably from 1 to 10 mass% and more preferably from 1.5 to 7 mass%, and may be from 2 to 5 mass% or from 2 to 3 mass% in 100 mass% of the adhesive ink of the present invention.

In a case where the pigment is a white pigment, the content of the white pigment is preferably from 1 to 10 mass%, and more preferably from 1.5 to 7 mass%, in 100 mass% of the adhesive ink of the present invention, from the viewpoint of achieving both color developability and design characteristics, and hot-melt properties and fastness.

In a case where the pigment is a colored pigment, a content of the colored pigment is preferably from 1 to 5 mass%, and more preferably from 1.5 to 3 mass%, in 100 mass% of the adhesive ink of the present invention, from the viewpoint of achieving both color developability and design characteristics, and hot-melt properties and fastness.

### Additional Components

The adhesive ink of the present invention may further contain an additional component other than the components described above, as long as the object of the present invention is not impaired. For example, the adhesive ink may contain an appropriate amount of an additive such as a dispersant, a leveling agent, an ultraviolet absorber, an ultraviolet stabilizer, a thickener, a wetting agent, a plasticizer, a stabilizer, an antifoaming agent, an antioxidant, a crosslinking promoter, a PH adjuster, a preservative, a chain transfer agent, or a chelating agent.

In a case where the additional component is added, a content thereof is not particularly limited, but is preferably 2 mass% or less, and preferably 1 mass% or less, relative to 100 mass% of the adhesive ink of the present invention. In order to exhibit the effect from the addition thereof, the content of the additive is preferably 0.01 mass% or more, and more preferably 0.05 mass% or more.

### Method for producing adhesive ink

The method for producing the adhesive ink of the present invention is not particularly limited. For example, the adhesive ink can be produced by mixing a resin (preferably an emulsion described below), water, a water-soluble organic solvent, and, as necessary, a crosslinking agent, a surfactant, a color material, and an additional component.

As described above, in the adhesive ink of the present invention, the resin is preferably added in the form of an emulsion.

From the viewpoint of handleability, a content of the emulsion particles in the emulsion is preferably from 10 to 80 mass%, more preferably from 20 to 70 mass%, and still more preferably from 25 to 65 mass%. Note that the content of emulsion particles can be determined as a non-volatile content (solid content) of the emulsion. That is, it is preferable to adjust the solid content of the emulsion to fall within the above range. Note that as used herein, the non-volatile content (solid content) refers to a component excluding the solvent.

The solvent which is a dispersion medium of the emulsion particles is preferably water or a mixed solvent of water and a water-soluble organic solvent. Examples of the water-soluble organic solvent include the same water-soluble organic solvents as described above, The solvent serving as the dispersion medium of the emulsion particles may be derived from, for example, a solvent used in producing the resin, or may be derived from a solvent separately added to a produced resin or a commercially available resin. A commercially available emulsion can also be used.

When the resin (preferably emulsion), water, the water-soluble organic solvent, and, as necessary, the crosslinking agent, the surfactant, the color material, and the additional component are mixed, the crosslinking agent, the surfactant, the color material, and the other additive may be used as they are, or may be added as a solution in which the components are diluted or dispersed with a solvent or the like.

In particular, when a pigment is used as the color material, it is preferable that the pigment, a dispersant, and a solvent are mixed and a dispersion treatment is performed with a bead mill or the like to prepare a pigment dispersion liquid in which the pigment is dispersed in the solvent in advance, and the pigment dispersion liquid is mixed with the other components. Examples of the pigment dispersion liquid to be used in the production of the adhesive ink include the same pigment dispersion liquid used in the production of the colored ink to be described below, and preferred aspects thereof are also the same.

The method and order of mixing the above components are not particularly limited. After the mixing, centrifugation, filtration through a filter, or the like may be performed as necessary.

As described above, the adhesive ink of the present invention is an adhesive ink for inkjet printing to be used for transfer printing onto a fabric. That is, the present invention also includes a method in which the adhesive ink of the present invention is used as an adhesive ink for producing, by an inkjet method, a transfer medium to be used for transfer printing onto a fabric.

The adhesive ink to be used in the method is as described above, and preferred aspects thereof are also the same.

Preferred aspects of the transfer medium are described in the section of the transfer medium to be described below.

### 2. Ink set

The present invention also includes an ink set including the adhesive ink described above and a colored ink containing a pigment and a resin.

The adhesive ink constituting the ink set of the present invention is as described above, and preferred aspects thereof are also the same.

A hue of the colored ink constituting the ink set of the present invention is not particularly limited, and only needs to be selected from black, white, and a chromatic color. The chromatic color include colors having different densities such as light cyan, dark yellow, light magenta, and light black, in addition to magenta, yellow, and cyan, which are the three primary colors of subtractive color mixture. Further, one or more hues selected from red, blue, orange, green, and violet may be used. In the present specification, a pigment exhibiting a white hue may be referred to as a white pigment, and a pigment exhibiting a hue other than white (chromatic color or black) may be referred to as a colored pigment.

The hue of the colored ink can be controlled by the pigment. The pigment contained in the colored ink is not particularly limited, and a pigment used in a general colored ink for inkjet printing can be used. Examples of the pigment include an organic pigment and an inorganic pigment, and these pigments may be used alone or in combination of two or more types thereof. If necessary, the pigments may be used in combination with an extender pigment.

Examples of the organic pigment include an azo pigment such as benzidine and Hansa yellow; a diazo pigment; an azomethine pigment; a methine pigment; an anthraquinone pigment; a phthalocyanine pigment such as phthalocyanine blue; a perinone pigment; a perylene pigment; a diketopyrrolopyrrole pigment; a thioindigo pigment; an iminoisoindoline pigment; an isoindolinone pigment such as iminoisoindolinone; a dioxazine pigment; a quinacridone pigment such as Quinacridone Red and Quinacridone Violet; a flavanthrone pigment; an indanthrone pigment; an anthrapyrimidine pigment; a carbazole pigment; Monoarylide Yellow; Diarylide Yellow; Benzimidazolone Yellow; Tolyl Orange; Naphthol Orange; and a quinophthalone pigment.

The hue of the organic pigment is not particularly limited, and any of the above-described pigments exhibiting a chromatic hue can be used. Specific examples thereof include products of product numbers such as C.I. Pigment Yellow, C.I. Pigment Red, C.I. Pigment Orange, C.I. Pigment Violet, C.I. Pigment Blue, and C.I. Pigment Green.

Examples of the inorganic pigment include titanium dioxide, antimony trioxide, zinc oxide such as zinc white, lithopone, lead white, red iron oxide, black iron oxide, chromium oxide green, carbon black, chrome yellow, molybdenum red, ferric ferrocyanide (Prussian blue), ultramarine, and lead chromate. Examples of the inorganic pigment also include a pigment having a flat shape, such as mica, clay, aluminum powder, talc, and aluminum silicate; and an extender pigment such as calcium carbonate, magnesium hydroxide, aluminum hydroxide, barium sulfate, and magnesium carbonate. Examples of carbon black include furnace black, thermal lamp black, acetylene black, and channel black.

Among the inorganic pigments, preferable examples of the white pigment include titanium dioxide, antimony trioxide, zinc oxide such as zinc white, lithopone, lead white, calcium carbonate, magnesium hydroxide, aluminum hydroxide, barium sulfate, magnesium carbonate, clay, talc, and aluminum silicate. Among these, titanium dioxide is preferable from the viewpoint of having a high refractive index and excellent hiding power. Among the titanium dioxide, titanium dioxide having a rutile crystal structure is preferable.

Preferable examples of the colored pigment include the above-mentioned organic pigments, red iron oxide, black iron oxide, chromium oxide green, carbon black, chrome yellow, molybdenum red, ferric ferrocyanide (Prussian blue), ultramarine, and lead chromate.

From the viewpoints of dispersion stability and color developability or hiding power, an average particle size (volume-based) of the pigment is preferably from 10 to 1000 nm, and more preferably from 20 to 500 nm.

In a case of a white pigment, from the viewpoint of excellent hiding power, the average particle size (volume-based) is preferably from 100 to 500 nm. A lower limit of is more preferably 150 nm or more, and even more preferably 200 nm or more, and an upper limit is more preferably 450 nm or less, and still more preferably 400 nm or less.

In the case of a colored pigment, in particular, from the viewpoint of color developability, the average particle size (volume-based) is preferably from 20 to 200 nm. The lower limit is more preferably 40 nm or more, and even more preferably 50 nm or more, and the upper limit is more preferably 150 nm or less, and even more preferably 100 nm or less.

The average particle size (volume-based) of the pigment can be measured using a laser diffraction scattering-type particle size distribution meter or by a dynamic light scattering method. For example, a cumulant average particle size measured by a dynamic light scattering method as shown in Examples described below can be adopted. However, when measurement by the dynamic light scattering method is difficult as in the case of a black pigment or the like, a 50% particle size in a volume-based particle size distribution obtained by measuring with a laser diffraction scattering-type particle size distribution meter can be adopted as the average particle size.

The pigment is preferably dispersion-stabilized with a dispersant in the colored ink. For this reason, in the production of the colored ink, it is preferable that a pigment, a dispersant, and a solvent are mixed and a dispersion treatment is performed by a bead mill or the like to adjust a pigment dispersion liquid until the pigment is dispersed in the solvent, and then the pigment dispersion liquid is mixed with a resin and a component described below to produce the colored ink.

Examples of the dispersant include poly(meth)acrylic acid (salt) such as poly(meth)acrylic acid and a poly(meth)acrylate salt; a copolymer of (meth)acrylic acid (salt) and one type or two or more types of the monomer components other than the (meth)acrylic acid (salt), such as an alkyl (meth)acrylate ester, (meth)acrylamide, styrene, maleic acid, maleic anhydride, maleate ester, and vinyl acetate; polyvinyl alcohol; and polyvinyl pyrrolidone.

The solvent in the pigment dispersion liquid is preferably an aqueous solvent, and examples of the aqueous solvent include the solvents described as the aqueous solvent used in the emulsion polymerization.

The content of the pigment in the colored ink is preferably from 1 to 50 mass%, and more preferably from 2 to 35 mass%.

In particular, in the case where the pigment is a white pigment, the content of the white pigment in the colored ink is preferably from 5 to 40 mass%, and more preferably from 10 to 30 mass%. In a case where the pigment is an organic pigment, the content of the organic pigment in the colored ink is preferably from 1 to 30 mass%, and more preferably from 2 to 15 mass%.

The type of the resin contained in the colored ink constituting the ink set of the present invention is not particularly limited, and examples thereof include a vinyl-based resin, an acrylic-based resin, a polyester-based resin, an olefin-based resin, a urethane-based resin, a fluorine-based resin, a silicone-based resin, an epoxy resin, a phenoxy resin, a phenol resin, and a xylene resin. Among these, an acrylic-based resin and/or a polyester-based resin is preferable, and an acrylic-based resin is particularly preferable.

In particular, in the ink set of the present invention, the resin to be used in the colored ink is preferably a resin of the same type as the resin to be used in the adhesive ink. That is, in the ink set of the present invention, in a case where an acrylic-based resin and/or a polyester-based resin is used as the adhesive ink, it is preferable to also use an acrylic-based resin and/or a polyester-based resin as the resin to be used in the colored ink. In a case where acrylic-based resin is used as the adhesive ink, it is more preferable to also use an acrylic-based resin as the resin to be used in the colored ink, and in a case where a polyester-based resin is used as the adhesive ink, it is more preferable to also use a polyester-based resin as the resin to be used in the colored ink. When the ink set is used, an interface between the layer formed of the adhesive ink and the layer formed of the colored ink in the transfer medium or the printed material is less likely to be peeled off, and as a result, transferability and fastness of the obtained printed material are further improved.

As the acrylic-based resin to be used in the colored ink, a known acrylic-based resin can be used. Among them, a resin containing a structural unit derived from a (meth)acrylic-based monomer is preferable. Specific examples of the (meth)acrylic-based monomer are the same as those described as the (meth)acrylic-based monomer used in the adhesive ink. The (meth)acrylic-based monomer preferably includes at least one selected from the group consisting of alkyl (meth)acrylate, (meth)acrylic acid (salt), and hydroxyalkyl (meth)acrylate, and more preferably includes all of (meth)acrylic acid (salt), alkyl (meth)acrylate, and hydroxyalkyl (meth)acrylate.

The alkyl (meth)acrylate is preferably a C₁₋₁₈ alkyl (meth)acrylate, and more preferably a C₄₋₁₂ alkyl (meth)acrylate. In particular, the alkyl (meth)acrylate preferably includes at least a C₄₋₁₂ chain alkyl acrylate, and more preferably includes a C₄₋₁₂ chain alkyl acrylate and a C₄₋₁₂ cyclic alkyl methacrylate.

A content of the structural unit derived from the (meth)acrylic-based monomer (preferably a total content of the structural units derived from (meth)acrylic acid (salt), alkyl (meth)acrylate, and hydroxyalkyl (meth)acrylate) is preferably from 30 to 100 mass%, more preferably from 40 to 99 mass%, and still more preferably from 55 to 95 mass%, relative to a total of 100 mass% of structural units derived from all monomer components constituting the acrylic-based resin to be used in the colored ink.

A content of the structural unit derived from the alkyl (meth)acrylate is preferably from 20 to 99 mass%, more preferably from 30 to 98 mass%, and still more preferably from 40 to 95 mass%, relative to a total of 100 mass% of structural units derived from all monomer components constituting the acrylic-based resin to be used in the colored ink.

In addition, a content of the structural unit derived from the C₄₋₁₂ cyclic alkyl methacrylate relative to 100 parts by mass of the structural unit derived from the C₄₋₁₂ chain alkyl acrylate is preferably from 1 to 100 parts by mass, more preferably from 3 to 50 parts by mass, and still more preferably from 5 to 20 parts by mass.

A content of the structural unit derived from (meth)acrylic acid (salt) is preferably from 0.1 to 5 mass%, more preferably from 0.5 to 4 mass%, and still more preferably from 1.0 to 3 mass%, relative to a total of 100 mass% of structural units derived from all monomer components constituting the acrylic-based resin to be used in the colored ink. When the content is adjusted to fall within the above range, fastness to rubbing and fastness to washing of the obtained printed material can be further improved.

A content of the structural unit derived from hydroxyalkyl (meth)acrylate is preferably from 0.1 to 5 mass%, more preferably from 0.3 to 4 mass%, and still more preferably from 0.5 to 3 mass%, relative to a total of 100 mass% of structural units derived from all monomer components constituting the acrylic-based resin to be used in the colored ink. When the content is adjusted to fall within the above range, water resistance of the obtained printed material can be enhanced.

The acrylic-based resin to be used in the colored ink may further have a structural unit derived from a styrene-based monomer. A total content of the structural unit derived from the (meth)acrylic-based monomer and the structural unit derived from the styrene-based monomer is preferably 50 mass% or more, more preferably 80 mass% or more, and still more preferably 95 mass% or more, and may be 100 mass%, relative to a total of 100 mass% of structural units derived from all monomer components constituting the acrylic-based resin to be used in the colored ink. Specific examples of the styrene-based monomer are the same as those described as the styrene-based monomer to be used in the adhesive ink.

The content of the structural unit derived from the styrene-based monomer is, for example, from 10 to 150 parts by mass, preferably from 30 to 100 parts by mass, and more preferably from 40 to 70 parts by mass, relative to 100 parts by mass of the structural unit derived from the (meth)acrylic-based monomer.

The acrylic-based resin to be used in the colored ink may further have a structural unit derived from a monomer other than the (meth)acrylic-based monomer and the styrene-based monomer. Examples of the monomer other than the (meth)acrylic-based monomer and the styrene-based monomer include the monomers described as the acid group-containing monomer (excluding (meth)acrylic acid) and the other monomer to be used in the adhesive ink.

As the polyester-based resin to be used in the colored ink, a known polyester-based resin can be used. The polyester-based resin is preferably a polycondensate of an aromatic dicarboxylic acid and a diol compound, and specific examples of the aromatic dicarboxylic acid and the diol compound are the same as those described above.

A weight average molecular weight (Mw) of the resin to be used in the colored ink is not particularly limited, but is preferably 50000 or more, more preferably 300000 or more, still more preferably 550000 or more, and particularly preferably 600000 or more, from the viewpoint of suppressing flowing of the colored ink after printing. An upper limit of the weight average molecular weight of the resin to be used in the colored ink is preferably 5000000 or less from the viewpoint of improving film-forming properties and water resistance.

A glass transition temperature (Tg (°C)) of the resin to be used in the colored ink is not particularly limited. However, from the viewpoint of enhancing texture of the obtained printed material, the glass transition temperature is preferably from -50 to 10°C, more preferably -45 to 5°C, and still more preferably -40 to 3°C.

In a case where the resin is contained in the colored ink, the resin is preferably added in the form of an emulsion, i.e., the resin is preferably contained in the form of emulsion particles in the colored ink. Preferred aspects of the composition, physical properties, and the like of the resin constituting the emulsion particles are as described above.

A content of the resin (preferably emulsion particles) in the colored ink is, for example, from 5 to 40 mass%, preferably from 8 mass% to 30 mass%, and more preferably from 10 to 25 mass%. Adjusting the content of the resin to fall within the above range allows viscosity of the colored ink to be maintained within an appropriate range.

The colored ink preferably further contains a solvent. As the solvent, an organic solvent or an aqueous solvent can be suitably used. However, an aqueous solvent is preferably used from the viewpoint of reducing an environmental load. Examples of the aqueous solvent include water and a mixed solvent of water and a water-soluble organic solvent. From the viewpoint of enhancing moisture retention and compatibility with the resin, the aqueous solvent contained in the colored ink preferably contains a water-soluble organic solvent. Preferred aspects of a type and a content of the water-soluble organic solvent are the same as the preferred aspects of the type and content of the water-soluble organic solvent in the adhesive ink.

The content of the solvent in the colored ink may be set depending on desired viscosity of the colored ink, and is not particularly limited. However, the content of the solvent is, for example, from 40 to 90 mass%, preferably from 50 to 88 mass%, and more preferably from 55 to 85 mass%.

The colored ink may further contain a crosslinking agent. It is presumed that using the crosslinking agent results in the formation of a crosslinked structure due to interaction or a chemical reaction with the components, such as the resin, contained in the colored ink, whereby a tough coating film can be formed, and thus fastness to wet rubbing and fastness to washing of the obtained printed material are further improved. Examples of the crosslinking agent that can be used in the colored ink include the compounds exemplified as the crosslinking agent that can be used in the adhesive ink, and preferred aspects thereof are also the same.

The content of the crosslinking agent is not particularly limited, but is, for example, from 0 to 10 parts by mass, preferably from 0.05 to 10 parts by mass, more preferably from 0.1 to 8 parts by mass, and still more preferably from 0.2 to 5 parts by mass, relative to 100 parts by mass of the resin.

The colored ink may further contain a surfactant. Examples of the surfactant that can be used in the colored ink include the compounds exemplified as the surfactant that can be used in the adhesive ink, and preferred aspects thereof are also the same.

A content of the surfactant is not particularly limited, but is preferably from 0.01 to 2 mass% and more preferably from 0.1 to 1 mass%, relative to 100 mass% of the colored ink.

The colored ink may contain an additional component other than the above-described components within a range in which the object of the present invention is not impaired. For example, the colored ink may contain an appropriate amount of an additive such as a leveling agent, an ultraviolet absorber, an ultraviolet stabilizer, a thickener, a wetting agent, a plasticizer, a stabilizer, an antifoaming agent, a dye, an antioxidant, a crosslinking promoter, a PH adjuster, or a preservative. In a case where the additional component is added, the content thereof is not particularly limited, but is preferably 2 mass% or less, and more preferably 1 mass% or less, relative to 100 mass% of the colored ink. In order to exhibit the effect from the addition thereof, the content of the additive is preferably 0.01 mass% or more, and more preferably 0.05 mass% or more.

### 3. Transfer medium

The present invention also includes a transfer medium in which the adhesive ink of the present invention is printed on a transfer base material with or without a colored ink layer formed of a colored ink containing a pigment and a resin interposed between the adhesive ink and the transfer base material. The transfer medium of the present invention is formed by using the above-described adhesive ink, and thus, by using the transfer medium, transferability at the time of transfer printing on a fabric is excellent, and fastness to wet rubbing and texture of the obtained printed material can be enhanced. Note that the transfer medium in which the adhesive ink is printed on the transfer base material with the colored ink layer interposed therebetween is preferably a transfer medium in which a colored ink containing a pigment and a resin is printed on the transfer base material and the adhesive ink of the present invention is further printed on the colored ink.

Hereinafter, a layer formed by printing the colored ink, that is, a layer formed of the colored ink may be referred to as a colored ink layer, and a layer formed by printing the adhesive ink, that is, a layer formed of the adhesive ink may be referred to as an adhesive ink layer.

The colored ink layer and the adhesive ink layer in the transfer medium of the present invention are formed to be peelable from the transfer base material.

In a case where the transfer medium of the present invention is a transfer medium in which an adhesive ink is printed on a transfer base material with a colored ink layer interposed therebetween, the transfer medium can be said to be a laminate A in which a colored ink layer is provided on a transfer base material and an adhesive ink layer is further provided on the colored ink layer. On the other hand, in a case where the transfer medium of the present invention is a transfer medium in which an adhesive ink is printed on a transfer base material without a colored ink layer interposed therebetween, the transfer medium can be said to be a laminate B in which an adhesive ink layer is laminated on a transfer base material. In particular, in a case where the adhesive ink forming the adhesive ink layer contains a color material, it is preferable to use the form of the laminate B.

In addition, it can be said that the transfer medium of the present invention is a laminate in which the adhesive ink layer in each of the laminates A and B is an adhesive ink layer containing a resin having a glass transition temperature of 30°C or lower and a weight average molecular weight of 10000 to 700000 (the resin contained in the adhesive ink described above).

Hereinafter, a transfer medium in which the adhesive ink of the present invention is printed on a transfer base material with a colored ink layer interposed therebetween (namely, laminate A) may be referred to as a transfer medium A, and a transfer medium in which the adhesive ink of the present invention is printed without a colored ink layer interposed therebetween (namely, laminate B) may be referred to as a transfer medium B.

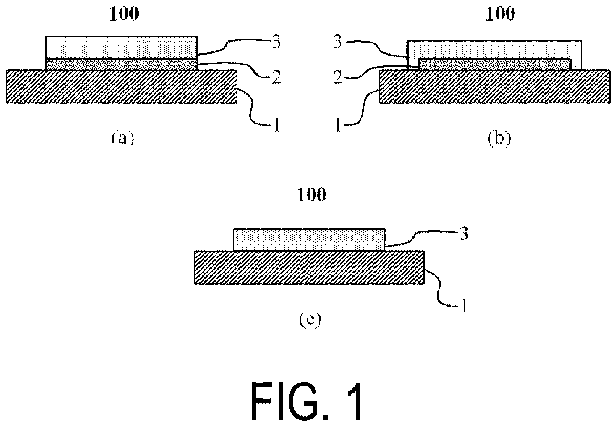

FIG. 1 is a schematic cross-sectional view illustrating an example of a laminated structure of the transfer medium of the present invention.

(a) and (b) in FIG. 1 illustrates examples of the transfer medium A. In transfer media 100 in (a) and (b), a colored ink layer 2 is provided on a transfer base material 1, and an adhesive ink layer 3 is provided on the colored ink layer 2. The adhesive ink layer 3 may be provided only in a portion where the colored ink layer 2 is formed as illustrated in (a) of FIG. 1, or may be provided not only in the portion where the colored ink layer 2 is formed but also in the periphery thereof as illustrated in (b) of FIG. 1. The aspect illustrated in (b) is preferable because fastness to wet rubbing of the obtained printed material is further improved.

(c) of FIG. 1 illustrates an example of the transfer medium B. In a transfer medium 100 in (c), the adhesive ink layer 3 is directly laminated on the transfer base material 1. In particular, in a case where the adhesive ink forming the adhesive ink layer 3 contains a color material, the form of the transfer medium B (for example, the form illustrated in (c) of FIG. 1) is preferable.

The transfer base material is not particularly limited, but is preferably a material that does not easily shrink during drying described below. Specific examples of the transfer base material include metal, wood, plastic, and paper.

Examples of the metal include aluminum and copper, and aluminum is preferable from the viewpoint of cost.

Examples of the plastic include a polyolefin resin, a polyester resin, a polyamide resin, and a polycarbonate resin. From the viewpoint of cost, the polyester resin is preferable, and an aromatic polyester such as polyethylene terephthalate, polybutylene terephthalate, and polyethylene naphthalate are more preferable.

Examples of the paper include plain paper, high-quality paper, and coated paper.

In particular, the transfer base material is preferably plastic or paper from the viewpoint of cost, more preferably the polyester resin from the viewpoint of good heat resistance, still more preferably the aromatic polyester, and particularly preferably polyethylene terephthalate.

The transfer base material may have a single-layer structure or a laminated structure.

The transfer base material is preferably in the form of a sheet or a film to facilitate the use of the transfer medium. A thickness of the transfer base material is preferably from 10 to 50 µm.

In the transfer medium of the present invention, it is preferable that an ink-receiving layer is provided on a surface of the transfer base material on which the colored ink and/or the adhesive ink is printed. Specifically, the transfer medium A preferably includes an ink-receiving layer between the transfer base material and the colored ink layer, and the transfer medium B preferably includes an ink-receiving layer between the transfer base material and the adhesive ink layer. When the ink-receiving layer is provided, it is possible to suppress flowing or collapse of the colored ink or the adhesive ink printed on the ink-receiving layer, and it is possible to further enhance durability of the colored ink layer or the adhesive ink layer after being transferred to a fabric.

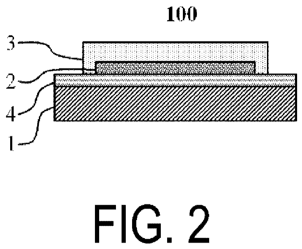

FIG. 2 is a schematic cross-sectional view illustrating an example of a laminated structure of the transfer medium A having an ink-receiving layer. In the transfer medium 100, an ink-receiving layer 4 is provided on the transfer base material 1, the colored ink layer 2 is provided on the ink-receiving layer 4, and the adhesive ink layer 3 is provided on the colored ink layer 2.

Note that in a case of using the form of the transfer medium B, the ink-receiving layer 4 may be provided on the transfer base material 1, and the adhesive ink layer 3 may be laminated on the ink-receiving layer 4 to form the transfer medium 100.

The ink-receiving layer can be formed by coating a transfer base material (or a transfer base material provided with a release layer described below) with a solution containing a resin for forming the ink-receiving layer. Examples of the resin include a (meth)acrylic-based resin such as a (meth)acrylic acid ester resin and a (meth)acrylic acid ester-styrene copolymer resin; an olefin-based resin such as a polyethylene resin and a polypropylene resin; a silicone resin; a polyvinyl alcohol resin; and a cellulose-based resin such as sodium carboxymethyl cellulose. The solution containing the resin for forming the ink-receiving layer may further contain an inorganic particle such as calcium carbonate or silica.

A thickness of the ink-receiving layer is not particularly limited, but is preferably 30 nm or more, and more preferably 100 nm or more, from the viewpoint of suppressing flowing of the colored ink and the adhesive ink. From the viewpoint of cost, the thickness is preferably 20 µm or less, and more preferably 10 µm or less. That is, the thickness of the ink-receiving layer is preferably from 30 nm to 20 µm, and more preferably from 100 nm to 10 µm.

In the transfer medium of the present invention, a release layer may be provided on at least one surface of the transfer base material. That is, in the transfer medium A, a release layer may be provided between the transfer base material and the colored ink layer (preferably the ink-receiving layer) and/or on the side of the transfer base material opposite to the side on which the colored ink layer is formed. Meanwhile, in the transfer medium B, a release layer may be provided between the transfer base material and the adhesive ink layer (preferably the ink-receiving layer) and/or on the side of the transfer base material opposite to the side on which the adhesive ink layer is formed. When the transfer medium includes a release layer between the transfer base material and the colored ink layer or between the transfer base material and the adhesive ink layer (preferably between the transfer base material and the ink-receiving layer), the colored ink layer or the adhesive ink layer to be transferred can be easily peeled off from the transfer base material, and thus the transfer from the transfer medium onto the fabric can be more easily performed. In addition, when the transfer medium includes the release layer on the side opposite to the surface on which the colored ink layer or the adhesive ink layer is formed, blocking between transfer media can be suppressed when the transfer media are stacked.

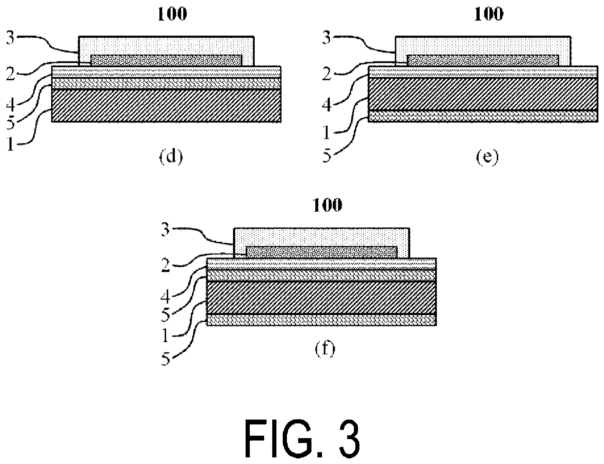

FIG. 3 is a schematic cross-sectional view illustrating examples of the laminated structure of the transfer medium A having an ink-receiving layer and a release layer. In a transfer medium 100 in (d) of FIG. 3, a release layer 5 is provided on the transfer base material 1, the ink-receiving layer 4 is provided on the release layer 5, the colored ink layer 2 is provided on the ink-receiving layer 4, and the adhesive ink layer 3 is further provided on the colored ink layer 2. In a transfer medium 100 in (e) of FIG. 3, the ink-receiving layer 4 is provided on one surface of the transfer base material 1, the release layer 5 is provided on the other surface thereof, the colored ink layer 2 is provided on the ink-receiving layer 4, and the adhesive ink layer 3 is provided on the colored ink layer 2. In a transfer medium 100 in (f) of FIG. 3, the release layer 5 is provided on both surfaces of the transfer base material 1, the ink-receiving layer 4 is provided on one of the release layer 5, the colored ink layer 2 is provided on the ink-receiving layer 4, and the adhesive ink layer 3 is further provided on the colored ink layer 2.

Note that in a case where the form of the transfer medium B is used, in (d) to (f) of FIG. 3, a transfer medium 100 in which the adhesive ink layer 3 is directly laminated on the ink-receiving layer 4 may be used.

The release layer is preferably a layer obtained by coating at least one surface of the transfer base material with a release agent. Examples of the release agent include a polyethylene wax-based release agent, a silicone-based release agent, and a fluorine-based release agent.

A thickness of the release layer is not particularly limited, but is preferably 10 nm or more, and more preferably 30 nm or more from the viewpoint of further improving transferability, and is preferably 2 µm or less from the viewpoint of suppressing bulkiness when the transfer medium is formed into a roll shape.

The sheet or the film in which an ink-receiving layer and/or a release layer is provided on a transfer base material is commercially available, and the transfer medium may be constituted by using the commercially available product. Examples of the commercially available product include a DTF Transfers film (available from One More Buck).

In the transfer medium of the present invention, the colored ink forming the colored ink layer is the same as described as the colored ink constituting the ink set described above, and preferred aspects thereof are also the same.

The colored ink layer may be single-layer or multilayer. For example, when a colored ink layer constituting an intended image or character (hereinafter, sometimes referred to as a pattern) is provided on the transfer base material side and a colored ink layer exhibiting a white hue is provided thereon (i.e., on the adhesive ink layer side), good color developability can be exhibited even in a case where a fabric as the transfer-receiving medium is a dark-colored fabric such as a black fabric.

In a case where the transfer medium has an ink-receiving layer, a part or all of the colored ink layer and/or the adhesive ink layer laminated on the ink-receiving layer may be absorbed in the ink-receiving layer.

In particular, in a case where the transfer medium A has an ink-receiving layer, a part or all of the colored ink layer may be absorbed in the ink-receiving layer.

Meanwhile, in a case where the transfer medium B has an ink-receiving layer, a part of the adhesive ink layer may be absorbed in the ink-receiving layer.

An ejection weight per unit area of the colored ink in the transfer medium of the present invention is not particularly limited, but is preferably 1 to 200 g/m², and more preferably 5 to 100 g/m². When the colored ink layer is formed in this range, there is a tendency that a printed material having further improved texture and fastness to wet rubbing is obtained.

In the transfer medium of the present invention, the adhesive ink for forming the adhesive ink layer is the same as described above as the adhesive ink, and preferred aspects thereof are also the same.

A thickness of the adhesive ink layer in the transfer medium of the present invention is not particularly limited, but is preferably 0.5 µm or more, more preferably 2 µm or more, still more preferably 5 µm or more or more than 5 µm, and particularly preferably 8 µm or more, in terms of film thickness after drying. When the thickness of the adhesive ink is adjusted to fall within the above range, transferability and fastness to wet rubbing of the obtained printed material are further improved. In addition, the thickness of the adhesive ink layer is preferably 200 µm or less, more preferably 150 µm or less, and still more preferably 100 µm or less, and may be 50 µm or less, from the viewpoint of further improving texture of the obtained printed material. That is, the thickness of the adhesive ink layer is preferably from 0.5 to 200 µm, more preferably from 2 to 150 µm, further preferably from 5 to 100 µm, and particularly preferably from 8 to 100 µm, and may be from 8 to 50 µm.

### Method for producing transfer medium

The method for producing a transfer medium of the present invention is not particularly limited. but the transfer medium is preferably produced by a method including:
a step 3 of printing an adhesive ink by inkjet printing on a transfer base material or on a colored ink layer laminated on a transfer base material; and
a step 4 of drying the adhesive ink.

In a case where the step 3 is a step of printing the adhesive ink by inkjet printing on the colored ink layer laminated on the transfer base material, the colored ink layer is preferably formed by a step 1 of printing a colored ink by inkjet printing on the transfer base material and a step 2 of drying the colored ink.

Hereinafter, each step will be described in detail.

### Step 1

The step 1 is a step of printing a colored ink by inkjet printing on a transfer base material. Examples of the apparatus for performing the step 1 include an inkjet recording apparatus, and specific examples of the inkjet recording apparatus include, but are not limited to, MMP-TX13 (available from Mastermind). In a case where an inkjet recording apparatus is used, the colored ink can be printed on the transfer base material by ejecting the colored ink from an inkjet head and attaching the colored ink to a predetermined portion on the transfer base material. This forms a pattern of the colored ink layer on the transfer base material. Note that the wording "printing a colored ink by inkjet printing on a transfer base material" includes not only an aspect in which the colored ink is printed by inkjet printing directly on the transfer base material, but also an aspect in which the colored ink is printed by inkjet printing on a laminate in which another layer such as an ink-receiving layer and/or a release layer is provided on the transfer base material.

The colored ink used in the step 1 is the same as described as the colored ink constituting the ink set described above, and preferred aspects thereof are also the same.

The number of times of printing of the colored ink is not particularly limited, and is, for example, 1 to 6 times, preferably 1 to 4 times. In a case where printing is performed a plurality of times, the colored ink to be used in each time of printing may be the same or different. For example, after printing is performed using a colored ink for forming an intended pattern of an image, a character, or the like, printing may be further performed using a white colored ink. Through such a printing step, a white layer is formed between the fabric and the pattern in the obtained printed material, and thus, particularly in a case where a fabric having a deep color is used, the color developability becomes good. Note that when the white layer is formed between the fabric and the pattern, in a case where an adhesive ink containing a white pigment is used in the step 3 described below, a step of printing a white colored ink can be omitted.

In the step 1, an ink ejection amount in one time of printing is not particularly limited and may be determined depending on a desired thickness of the colored ink layer. For example, the ink ejection amount only needs to be adjusted in a range of 3 to 15 ng.

### Step 2

The step 2 is a step of drying the colored ink printed on the transfer base material. That is, it can be said that step 2 is a step of evaporating a part or all of components (i.e., solvent) excluding a solid content in the colored ink printed on the transfer base material. Even in a case where the ink-receiving layer is provided on the printed surface of the transfer base material, when the adhesive ink is further printed thereon, the colored ink may flow and a clear pattern may not be obtained. Thus, the step 2 of drying is preferably performed.

In the step 2, preferably 10 mass% or more, more preferably 15 mass% or more, and still more preferably 20 mass% or more of 100 mass% of the components excluding the solid content in the colored ink is evaporated. When the evaporation amount is adjusted to fall within the above range, it is possible to suppress flowing of the adhesive ink in the step 3 described below. In addition, in the step 2, preferably 80 mass% or less, more preferably 70 mass% or less, still more preferably 60 mass% or more, and particularly preferably 50 mass% or less or 40 mass% or less of 100 mass% of the components excluding the solid content in the colored ink is evaporated. When the evaporation amount is adjusted to fall within the above range, the colored ink layer and the adhesive ink layer are appropriately mixed at the interface therebetween, and peeling at the interface at the time of transfer printing can be suppressed, thereby further improving the transferability.

That is, the evaporation amount is preferably from 10 to 80 mass%, more preferably from 15 to 70 mass%, still more preferably from 20 to 60 mass%, and particularly preferably from 20 to 50 mass% or from 20 to 40 mass%.

Note that conditions for achieving a desired evaporation amount can be determined by ejecting a certain weight of a colored ink having a known solid content concentration onto a base material, measuring the total weight of the ink and the base material after drying and the weight of only the base material with a precision balance, and calculating an evaporation amount in advance. The drying treatment of the step 2 may be performed under the same conditions.

An apparatus for performing the step 2 is not particularly limited, and for example, a heating unit (such as a platen heater, a warm air heater, or an infrared heater) in an inkjet recording apparatus can be used. Among them, it is preferable to employ a platen heater from the viewpoint of uniform drying. In a case where the inkjet recording apparatus has no platen heater, a planar heating element such as a rubber heater may be provided on the platen of the inkjet recording apparatus as an alternative to the platen heater.

The above-described evaporation amount can be adjusted by controlling the heating temperature, the heating time, the warm air temperature, the air flow rate, and the like. The conditions of the heater are preferably set by measuring the evaporation amount in advance before the experiment. For example, in a case of using a platen heater or a planar heating element as an alternative to the platen heater, the colored ink can be dried by heating the transfer base material from the back surface thereof by the platen heater or the planar heating element. The heating temperature of the platen heater or the planar heating element is preferably 30°C or higher, and more preferably 40°C or higher, from the viewpoint of shortening the heating time. On the other hand, when the heating temperature of the platen heater or the planar heating element is too high, heat may be conducted to the inkjet head to cause nozzle clogging. Thus, the heating temperature is preferably 80°C or lower, more preferably 70°C or lower, and still more preferably 60°C or lower. That is, the heating temperature of the platen heater or the planar heating element is preferably from 30 to 80°C, more preferably from 40 to 70°C, and still more preferably from 40 to 60°C.

Note that the step 2 may be performed simultaneously with the step 1, may be performed after the step 1, or may be performed simultaneously with and after the step 1. In a case where the step 2 is performed simultaneously with the step 1, the step 2 may be performed continuously or intermittently from the start to the end of the step 1, but is preferably performed continuously. For example, in a case where the colored ink is printed a plurality of times, it is preferable to dry the colored ink during and/or after printing of each colored ink. In this case, the evaporation amount of the components excluding the solid content in each colored ink may be adjusted to fall within the above-described range, or the evaporation amount of the components excluding the solid contents in all the colored inks may be adjusted to fall within the above-described range.

Through the step 1 and the step 2, the colored ink layer can be laminated on the transfer base material. The colored ink layer constitutes an intended pattern of an image, a character, or the like. However, in a case where the adhesive ink used in the step 3 described below contains a color material, the adhesive ink can constitute the intended pattern, and thus the steps 1 and 2 can be omitted.

### Step 3

The step 3 is a step of printing the adhesive ink by inkjet printing on the transfer base material or on the colored ink layer laminated on the transfer base material. The wording "printing the adhesive ink by inkjet printing on the transfer base material" includes not only an aspect in which the adhesive ink is directly printed by inkjet printing on the transfer base material, but also an aspect in which the adhesive ink is printed by inkjet printing on a laminate in which another layer (excluding the colored ink layer) such as an ink-receiving layer and/or a release layer is provided on the transfer base material.

For example, in a case where the transfer medium A having an ink-receiving layer is prepared, the printing of the adhesive ink in the step 3 is preferably performed on the surface of a laminate on the colored ink layer side, in which the transfer base material, the ink-receiving layer, and the colored ink layer are laminated in this order. In a case where the transfer medium B having an ink-receiving layer is prepared, the printing of the adhesive ink in the step 3 is preferably performed on the ink-receiving layer laminated on the transfer base material.

The adhesive ink used in the step 3 is the same as described above as the adhesive ink, and preferred aspects thereof are also the same.

Examples of the apparatus for performing the step 3 include the same inkjet recording apparatus as used in the step 1. In a case where the inkjet recording apparatus is used, the adhesive ink can be printed by ejecting the adhesive ink from an inkjet head and attaching the adhesive ink onto the transfer base material or the ink-receiving layer and/or the release layer provided on the transfer base material, or onto the colored ink layer formed in the step 2. Thus, the adhesive ink layer is formed on the transfer base material or the ink-receiving layer and/or the release layer provided on the transfer base material, or on the colored ink layer. Note that in a case where the adhesive ink is printed (attached) on the colored ink layer, the transfer medium as illustrated in (b) of FIG. 1 can be obtained by printing (attaching) the adhesive ink not only on the colored ink layer but also around the colored ink layer.

When an apparatus equipped with a plurality of inkjet heads is used as the inkjet recording apparatus, printing of the colored ink and printing of the adhesive ink can be continuously performed. For example, when the above-described ink set including one type or two or more types of colored inks and the adhesive ink is mounted in respective color ink cartridges of the inkjet recording apparatus and an ink is ejected from each inkjet head corresponding to each ink cartridge, printing of the colored ink and printing of the adhesive ink can be continuously performed.

The number of times of printing of the adhesive ink is not particularly limited and may be determined depending on the desired thickness of the adhesive ink layer. For example, the number of times of printing is 1 to 6 times, and preferably 1 to 4 times. In the step 3, the ink ejection amount in one time of printing is not particularly limited, and may be determined depending on a desired thickness of the adhesive ink layer. For example, the amount may be adjusted in a range of 3 to 15 ng.

### Step 4

The step 4 is a step of drying the adhesive ink printed on the transfer base material or on the colored ink. That is, it can be said that the step 4 is a step of evaporating a part or all of the components (that is, the solvent) excluding the solid content in the colored ink or the adhesive ink printed in the step 1 or the step 3.

In the step 4, preferably 80 to 100 mass%, and more preferably 90 to 100 mass% of 100 mass% of the components excluding the solid content in the adhesive ink is evaporated.

An apparatus for performing the step 4 is not particularly limited, and for example, a heating unit (for example, a platen heater, a warm air heater, or an infrared heater) in the inkjet recording apparatus, a planar heating element such as a rubber heater which is installed on the platen and is used as an alternative to the platen heater, or the like can be used. The above-described evaporation amount can be adjusted by controlling the heating temperature, the heating time, the warm air temperature, the air flow rate, and the like. The conditions of the heater are preferably set by measuring the evaporation amount in advance before the experiment. For example, in a case of using a platen heater or a planar heating element which is an alternative to the platen heater, the colored ink and the adhesive ink can be dried by heating the transfer base material from the back surface thereof by the platen heater or the planar heating element. The heating temperature of the platen heater or the planar heating element is preferably 30°C or higher, and more preferably 40°C or higher, from the viewpoint of shortening the heating time. On the other hand, when the heating temperature of the platen heater is too high, heat may be conducted to the inkjet head to cause nozzle clogging. Thus, the heating temperature is preferably 80°C or lower, more preferably 70°C or lower, and still more preferably 60°C or lower. That is, the heating temperature of the platen heater or the planar heating element is preferably from 30 to 80°C, more preferably from 40 to 70°C, and still more preferably from 40 to 60°C.

In addition, it is also preferable that the transfer medium after the step 3 or after heating by the heating unit in the inkjet recording apparatus or an alternative thereto is dried using means such as natural drying, heating, depressurization, or contact with dry air or warm air. In the above means, heating temperature, heating time, pressure, warm air temperature, air flow rate, and the like may be appropriately set in accordance with an intended evaporation amount. For example, in a case of drying by heating or contact with warm air, the heating temperature or the warm air temperature is preferably from 40 to 180°C, more preferably from 80 to 160°C, and still more preferably from 100°C to 150°C. The heating time and the warm air contact time are preferably 0.5 to 30 minutes, and more preferably 1 to 10 minutes.

Note that the step 4 may be performed simultaneously with the step 3, may be performed after the step 3, or may be performed simultaneously with and after the step 3. In a case where the step 4 is performed simultaneously with the step 3, the step 4 may be performed continuously or intermittently from the start to the end of the step 3. In particular, it is preferable that the drying by the heating unit in the inkjet recording apparatus is continuously performed during the step 3 and the drying is further performed by heating or contact with warm air after the step 3. In a case where the printing of the adhesive ink is performed a plurality of times, it is preferable that the drying of the adhesive ink is performed by the heating unit or its alternative in the inkjet recording apparatus during the printing of each adhesive ink and/or after the completion of the printing of each adhesive ink, and the drying is performed by heating or contact with warm air after the completion of all the printing. In this case, the evaporation amount of the components excluding the solid content in each adhesive ink may be adjusted to fall within the above range, or the evaporation amount of the components excluding the solid contents in all adhesive inks may be adjusted to fall within the above range.

### 4. printed material

A printed material produced by transfer printing using the above-described adhesive ink, that is, a printed material produced by transfer printing using the above-described transfer medium is also included in the present invention. The specific adhesive ink is used, and thus the printed material of the present invention is excellent in fastness to wet rubbing and texture. Hereinafter, a method for producing the printed material of the present invention is described in detail.

### Method for producing printed material

The printed material of the present invention is obtained by transfer-printing the above-described transfer medium on a fabric. The transfer medium to be used in the production of the printed material of the present invention is the same as the above-described transfer medium, and preferred aspects thereof are also the same.

The fabric to be used is not particularly limited, and includes all textile products such as a cloth and a woven fabric in which a natural fiber and/or a synthetic fiber are used as the original yarn. Examples of the fabric include a woven fabric, a nonwoven fabric, and a knitted fabric. A fiber constituting the fabric is also not particularly limited, and examples thereof include a natural fiber, a chemical fiber, and a mixture thereof.

Preferable examples of the natural fiber include silk, cotton, and wool. Examples of the chemical fiber include a synthetic fiber, a recycled fiber, and a semi-synthetic fiber. Preferable examples of the synthetic fiber include a polyester fiber, a nylon fiber, an acrylic fiber, a polyurethane fiber, a polyethylene fiber, a polypropylene fiber, and a vinylon fiber. Preferable examples of the recycled fiber include rayon. Preferable examples of the semi-synthetic fiber include acetate and triacetate. Among these, a fabric formed of cotton, a polyester fiber, a polypropylene fiber, a nylon fiber, or a mixture thereof is preferable.

The method of transfer printing is not particularly limited, and a known method can be employed. For example, the transfer printing preferably includes bringing a surface of the transfer medium on which the adhesive ink layer is formed (i.e., the adhesive ink printed surface) into close contact with the fabric in a state where the surface faces the fabric, and peeling off the transfer base material from the fabric. Thus, the transfer base material can be peeled off in a state where the printed adhesive ink (adhesive ink layer) is left on the fabric side.

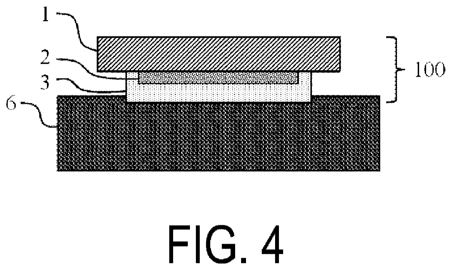

FIG. 4 is a schematic cross-sectional view illustrating an example of a laminated structure of the transfer medium A and the fabric in the close contact step. The surface of the transfer medium 100 on which the adhesive ink layer 3 is formed and a fabric 6 are disposed to face each other and are in close contact with each other. A part of the adhesive ink layer 3 is preferably caught in the fabric 6. This further improves the fastness to wet rubbing of the obtained printed material. Note that the same applies to a case of using the transfer medium B.

The close contact step preferably includes heating and pressurization as necessary. Examples of the close contact step include a method in which the transfer medium is brought into close contact with the fabric using a press machine, a heating drum, or the like and heated and pressurized.

The heating temperature in the close contact step is not particularly limited, but is preferably from 80 to 200°C, and more preferably from 100 to 180°C.

The pressure in the close contact step is also not particularly limited, but is preferably from 100 to 600 g/cm², and more preferably from 200 to 500 g/cm².

The close contact time is preferably 1 second or longer, and more preferably 3 seconds or longer, from the viewpoint of further improving transferability. An upper limit of the close contact time is not particularly limited, but is preferably 1 minute or shorter, and more preferably 30 seconds or shorter, from the viewpoint of productivity. That is, the close contact time is preferably from 1 second to 1 minute, and more preferably from 3 seconds to 30 seconds.

After the close contact step, the transfer base material is peeled off from the fabric to obtain a printed material. Note that from the viewpoint of reducing the amount of ink remaining on the transfer base material, it is preferable to peel off the transfer base material after the temperature of the fabric becomes 60°C or lower (particularly 40°C or lower).

Further, the obtained printed material may be heated and pressurized by a press machine, a heating drum, or the like. When a heating and pressurizing treatment is additionally performed on the obtained printed material, the fabric and the ink are more press-bonded to each other, thereby further improving fastness to wet rubbing.

A heating temperature in this step is not particularly limited, but is preferably from 80 to 200°C, and more preferably from 100 to 180°C.

Pressure in this step is also not particularly limited, but is preferably from 100 to 600 g/cm², and more preferably from 200 to 500 g/cm².

Heating and pressurizing time in this step is also not particularly limited, but is preferably from 1 second to 1 minute, and more preferably from 3 seconds to 30 seconds.

The present application claims the benefit of priority based on Japanese Patent Application No. 2023-024440 filed on February 20, 2023, and Japanese Patent Application No. 2023-027251 filed on February 24, 2023. The entire content of Japanese Patent Application No. 2023-024440 filed on February 20, 2023 and the entire content of Japanese Patent Application No. 2023-027251 filed on February 24, 2023 are incorporated herein by reference.

### Examples

The present invention will be described in more detail below by way of Examples, but is not limited to only these Examples. Note that "parts" represents "parts by mass" and "%" represents "mass%" unless otherwise specified.

### Adjustment of ink

### Emulsion Production Example 1

280 parts of deionized water was charged into a polymerization vessel equipped with a stirrer, a reflux condenser, a thermometer, a nitrogen inlet tube, and a dropping funnel. Thereafter, the internal temperature was raised to 75°C while stirring under a nitrogen gas stream. Meanwhile, an emulsified monomer was charged into the dropping funnel, the emulsified monomer composed of 490 parts of methyl methacrylate, 490 parts of butyl acrylate, and 20 parts of acrylic acid as monomer components, 4.0 parts of t-dodecyl mercaptan as a polymerization chain transfer agent, 62.5 parts of Softanol 300 (available from Nippon Shokubai Co., Ltd.) and 62.5 parts of LATEMUL WX (trade name, available from Kao Corporation) that served as emulsifiers and were each prepared as a 20% aqueous solution in advance, and 183.0 parts of deionized water. Then, while maintaining the internal temperature of the polymerization vessel at 75°C, 27.0 parts of the emulsified monomer, and 5 parts of a 5% aqueous solution of potassium persulfate and 10 parts of a 2% aqueous solution of sodium hydrogen sulfite as polymerization initiators (oxidizing agents) were added to initiate initial polymerization. After 40 minutes, the remaining emulsified monomer was uniformly added dropwise over 210 minutes while the inside of the reaction system was maintained at 80°C. At the same time, 95 parts of a 5% aqueous solution of potassium persulfate and 90 parts of a 2% aqueous solution of sodium hydrogen sulfite were uniformly added dropwise over 210 minutes, and after completion of the dropwise addition, the same temperature was maintained for 60 minutes to complete the polymerization. The obtained reaction liquid was cooled to room temperature, and then 16.7 parts of 2-dimethylethanolamine and 39 parts of deionized water were added to obtain an acrylic-based resin emulsion (hereinafter, referred to as emulsion 1). The solid content of the emulsion 1 was 55%, and the emulsion particles contained in the emulsion 1 had a Tg of 10°C, an average particle size of 200 nm, and a weight average molecular weight of 300000.

### Emulsion Production Example 2

An acrylic-based resin emulsion (hereinafter, referred to as emulsion 2) was obtained by performing a reaction in the same manner as in Emulsion Production Example 1 except that 62.5 parts of LATEMUL WX prepared as a 20% aqueous solution was changed to 62.5 parts of Adeka Reasorb SR-10 (trade name, available from ADEKA Corporation) prepared as a 20% aqueous solution. The solid content of the emulsion 2 was 55%, and the emulsion particles contained in the emulsion 2 had a Tg of 8°C, an average particle size of 200 nm, and a weight average molecular weight of 280000.

### Emulsion Production Example 3

An acrylic-based resin emulsion (hereinafter, referred to as emulsion 3) was obtained by performing a reaction in the same manner as in Emulsion Production Example 1 except that the amount of t-dodecyl mercaptan was changed to 20 parts. The solid content of the emulsion 3 was 55%, and the emulsion particles contained in the emulsion 3 had a Tg of 3°C, an average particle size of 200 nm, and a weight average molecular weight of 70000.

### Emulsion Production Example 4

An acrylic-based resin emulsion (hereinafter, referred to as emulsion 4) was obtained by performing a reaction in the same manner as in Emulsion Production Example 1 except that the monomer components used were changed to 250 parts of butyl acrylate, 490 parts of styrene, 240 parts of 2-ethylhexyl acrylate, and 20 parts of acrylic acid. The solid content of the emulsion 4 was 55%, and the emulsion particles contained in the emulsion 4 had a Tg of -6°C, an average particle size of 200 nm, and a weight average molecular weight of 250000.

### Emulsion Production Example 5

Elitel KT-0507 (polyester-based resin emulsion) available from UNITIKA LTD. (hereinafter, referred to as emulsion 5) was prepared. The solid content of the emulsion 5 was 25%, and the emulsion particles contained in the emulsion 5 had a Tg of -21°C, an average particle size of 150 nm, and a weight average molecular weight of 55000.

### Emulsion Production Example 6

Elitel KT-9204 (polyester-based resin emulsion) available from UNITIKA LTD. (hereinafter, referred to as emulsion 6) was prepared. The solid content of the emulsion 6 was 30%, and the emulsion particles contained in the emulsion 6 had a Tg of 22°C, an average particle size of 150 nm, and a weight average molecular weight of 70000.

### Emulsion Production Example 7

A flask equipped with a dropping funnel, a stirrer, a nitrogen gas inlet tube, a thermometer, and a reflux condenser was charged with 252 parts of deionized water. A pre-emulsion for dropwise addition containing 437 parts of deionized water, 80 parts of a 25% aqueous solution of an emulsifier (trade name: ADEKA REASORB SR-10, available from ADEKA CORPORATION), 25 parts of acrylic acid, 565 parts of 2-ethylhexyl acrylate, 50 parts of cyclohexyl methacrylate, 10 parts of hydroxyethyl methacrylate, and 350 parts of styrene was prepared in the dropping funnel. 44 parts of the pre-emulsion corresponding to 3% of the total amount of the pre-emulsion were added into the flask, the temperature was raised to 80°C while gently flushing with nitrogen gas, 30 parts of 5% aqueous solution of ammonium persulfate were added, and polymerization was initiated. Subsequently, the remainder of the pre-emulsion for dropwise addition and 30 parts of 5% aqueous solution of ammonium persulfate were uniformly added dropwise into the flask over 240 minutes. After completion of the dropwise addition, the content of the flask was maintained at 80°C for 180 minutes, after which 25% aqueous ammonia and deionized water were added to adjust the pH to 8.5 and the solid content to 50%, and polymerization was terminated. The obtained reaction liquid was cooled to room temperature, and then filtered through a wire mesh of 300 mesh to obtain an acrylic-based resin emulsion (hereinafter, referred to as emulsion 7). The solid content of the emulsion 7 was 50%, and the emulsion particles contained in the emulsion 7 had a Tg of -21°C, an average particle size of 200 nm, and a weight average molecular weight of 1100000.

### Emulsion Production Example 8

Elitel KT-8803 (polyester-based resin emulsion) available from UNITIKA LTD. (hereinafter, referred to as emulsion 8) was prepared. The solid content of the emulsion 8 was 30%, and the emulsion particles contained in the emulsion 8 had a Tg of 66°C, an average particle size of 100 nm, and a weight average molecular weight of 50000.

### Emulsion Production Example 9

An acrylic-based resin emulsion (hereinafter, referred to as emulsion 9) was obtained by performing a reaction in the same manner as in Emulsion Production Example 1 except that the amount of t-dodecyl mercaptan was changed to 60 parts. The solid content of the emulsion 9 was 55%, and the emulsion particles contained in the emulsion 9 had a Tg of 2°C, an average particle size of 200 nm, and a weight average molecular weight of 7000.

### Emulsion Production Example 10

An acrylic-based resin emulsion (hereinafter, referred to as emulsion 10) was obtained by performing a reaction in the same manner as in Emulsion Production Example 1 except that the monomer components used were changed to 498 parts of methyl methacrylate, 498 parts of butyl acrylate, and 4 parts of acrylic acid. The solid content of the emulsion 10 was 50%, and emulsion particles contained in the emulsion 10 had a Tg of 10°C, an average particle size of 200 nm, and a weight average molecular weight of 300000.

### Emulsion Production Example 11

An acrylic-based resin emulsion (hereinafter, referred to as emulsion 11) was obtained by performing a reaction in the same manner as in Emulsion Production Example 1 except that the monomer components used were changed to 500 parts of methyl methacrylate and 500 parts of butyl acrylate. The solid content of the emulsion 11 was 50%, and emulsion particles contained in the emulsion 11 had a Tg of 10°C, an average particle size of 200 nm, and a weight average molecular weight of 300000.

Methods for measuring the Tg, the average particle size, the weight average molecular weight, and the like of the emulsion particles in Production Examples 1 to 11 are as follows.

### Measurement of Tg of emulsion particles

The glass transition temperature (Tg) of the emulsion particles was measured by differential scanning calorimetry (DSC) under measurement conditions described below.
Measuring instrument: DSC 3500 (trade name, available from NETZSCH)
Sample container: Aluminum sealed container
Sample weight: 10 mg ± 2 mg
Measurement method: In an N₂ atmosphere, two cycles of heating from - 50°C to 150°C were performed. The heating/cooling rate was 10°C/min, and the holding time at -50°C and 150°C was 5 min. Using the analysis software proteus Analysis, the glass transition temperature was analyzed from the DSC curve chart in the second cycle of heating, and the value of the midpoint glass transition temperature was adopted.

### Measurement of average particle size of emulsion particles

The average particle size (volume-based) of emulsion particles was determined through cumulant analysis by measuring particle sizes using an emulsion produced in each Production Example as a test sample and using a particle size distribution analyzer (available from Otsuka Electronics Co., Ltd., product number: FPAR-1000) based on the dynamic light scattering method.

### Measurement of weight average molecular weight of emulsion particles

The weight average molecular weight (Mw) of the emulsion particles was measured by gel permeation chromatography (GPC) under conditions described below.
Measuring instrument: HLC-8320GPC (trade name, available from Tosoh Corporation)
Molecular weight column: TSK-GEL SuperMultiporeHZ (available from Tosoh Corporation)
Eluent: tetrahydrofuran (THF)
Standard substance for calibration curve: polystyrene (available from Tosoh Corporation)
Measurement method: A measurement target was dissolved in THF to have a solid content of about 0.2 mass%, and the solution filtered through a filter was used as a test sample to measure the molecular weight. The flow rate of the feed pump was 0.35 ml/min.

### Pigment Dispersion Production Example 1

Five parts of Discoat N-14 (available from DKS Co., Ltd.) as a dispersant, 6 parts of propylene glycol, 70 parts of deionized water, 100 parts of titanium oxide CR-95 (available from Ishihara Sangyo Kaisha, Ltd.), and zirconia beads having a particle size of 0.5 mm were filled at a volumetric rate of 50%, dispersed using a bead mill, and filtered with a filter having a pore size of 1 µm (MCP-1-C10S, available from Advantec Co., Ltd.) to obtain a white pigment dispersion (hereinafter, referred to as pigment dispersion 1) having a pigment content of 55%. The average particle size of the pigment was 330 nm.

### Pigment Dispersion Production Example 2

Three parts of a dispersant Joncryl 678 (available from BASF SE), 1.3 parts of dimethylaminoethanol, and 81 parts of deionized water were stirred and mixed at 70°C. Subsequently, 15 parts of C.I. Pigment Blue 15:3 LIONOL BLUE FG-7330 (available from Toyo Ink Co., Ltd.) as a blue pigment, 0.1 parts of Olfine D-10PG (available from Nissin Chemical Industry Co., Ltd.) as a surfactant, and zirconia beads having a particle size of 0.5 mm were filled at a volumetric rate of 50%, dispersed using a bead mill, and filtered through a filter having a pore size of 1 µm (MCP-1-C10S, available from Advantec Co., Ltd.) to obtain a blue pigment dispersion (hereinafter, referred to as pigment dispersion 2) having a pigment content of 15%. The average particle size of the pigment was 90 nm.

### Measurement of average particle size of pigment

Note that the average particle size (volume-based) of a pigment was determined through cumulant analysis by measuring particle sizes using a pigment dispersion produced in each Production Example as a test sample and using a particle size distribution analyzer (available from Otsuka Electronics Co., Ltd., product number: FPAR-1000) based on the dynamic light scattering method.

### Preparation of white ink

White ink was produced by mixing 30 parts of the emulsion 7 (15 parts as emulsion particles), 23 parts of the pigment dispersion 1, 1.2 parts of EPOCROS WS-700 (available from Nippon Shokubai Co., Ltd., solid content 25%) (0.3 parts as solid content), 2 parts of diethylene glycol monobutyl ether, 15 parts of triethylene glycol, 0.3 parts of KF-6011 as a surfactant (available from Shin-Etsu Chemical Co., Ltd., polyether-modified silicone-based surfactant), and 28.5 parts of deionized water, and then filtering the mixture through a filter having a pore size of 1 µm (available from Advantec Co., Ltd., MCP-1-C10S).

### Preparation of cyan ink

Cyan ink was produced in the same manner as in the preparation of the white ink except that the pigment dispersion 1 was changed to the pigment dispersion 2.

### Preparation of adhesive ink 1

An adhesive ink 1 was produced by mixing total 100 parts of 25 parts of the emulsion 1 as the emulsion particles, 2 parts of diethylene glycol monobutyl ether, 15 parts of triethylene glycol, 0.6 parts of KF-6011 (available from Shin-Etsu Chemical Co., Ltd.) as a surfactant, and 36.9 parts of deionized water, and then filtering the mixture through a filter having a pore size of 1 µm (MCP-1-C10S, available from Advantec Co., Ltd.).

### Preparation of adhesive inks 2 to 17

Adhesive inks 2 to 17 were produced in the same manner except that the types and charging amounts of the components in the preparation of the adhesive ink 1 were changed as shown in Table 1, and the charging amount of deionized water was adjusted to make the total amount of 100 parts. Note that "SURFYNOL 440" in Table 1 represents a trade name of an acetylene glycol-based surfactant available from Evonik Industries AG.

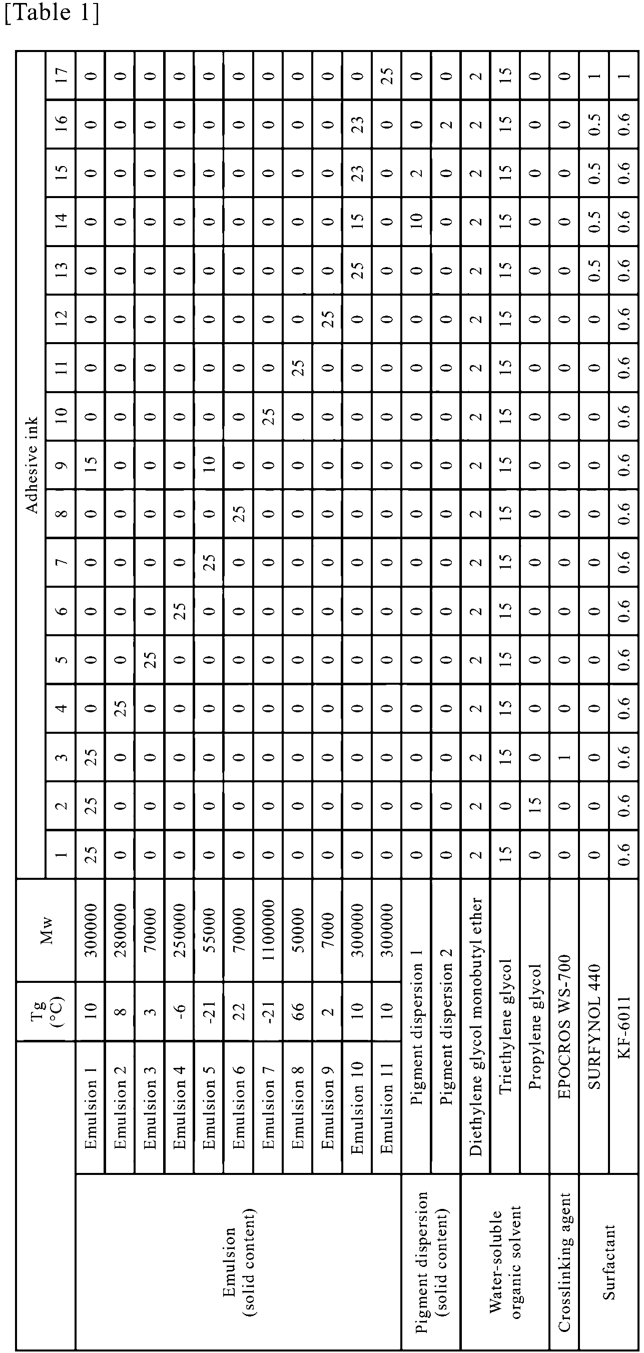

### Apparatus used and transfer base material

### Inkjet ejecting apparatus

Two printers (MMP-TX13) available from Mastermind were prepared and designated as a printer A and a printer B, respectively. In each printer, a rubber heater was placed on the platen and heating was performed at 50°C. The printer A was charged with a cyan ink and a white ink, which were colored inks. The printer B was charged with an adhesive ink and a cyan ink, which was a colored ink.

### Examples 1 to 22 and Comparative Examples 1 to 5

Using the ink prepared above, from printing to transfer described below was performed, and various characteristics were evaluated. The results are shown in Tables 2 to 4.

### Printing

The transfer base material was placed on the rubber heater, and image formation was performed by an inkjet method. In a case where the white ink was used, solid printing (8 × 16 cm²) was performed with the cyan ink using the printer A, and then solid printing (8 × 16 cm²) was performed thereon with the white ink. The printed transfer base material was transferred to the printer B, and solid printing (8 × 16 cm²) was performed thereon with the adhesive ink. In a case where the white ink was not used, solid printing (8 × 16 cm²) was performed with the cyan ink using the printer B, and then solid printing (8 × 16 cm²) was performed thereon with the adhesive ink. The ejection amount of the colored ink was 70 g/m² per unit area. Note that a PET film having an ink-receiving layer on one side was used as the transfer base material, and image formation was performed on the ink-receiving layer side.

### Drying

The base material on which the image was formed was dried in a hot air dryer at 130°C for 5 minutes to prepare a transfer medium.

Note that the thickness of the adhesive ink layer shown in Tables 2 to 4 was measured by cutting the obtained transfer medium and observing the cross-section of the adhesive ink layer using a digital microscope VHX-8000 series (available from Keyence Corporation). The thickness of the adhesive ink layer was adjusted by appropriately changing the ejection amount of the adhesive ink and the number of times of printing in the printing step.

### Transfer

### - Transfer in Examples 1 to 20 and Comparative Examples 1 to 3 -

A transfer press machine TP-630M available from Horizon International Inc. was used. The heating temperature was set to 150°C, and the press load was set to 3 kN (transfer pressure: 400 g/cm²).

A fabric as a transfer-receiving medium was placed on the lower platen, and the transfer medium was further placed thereon with the printed surface facing downward, followed by stamping for 10 seconds. After the stamping, after the temperature of the fabric was lowered to 40°C or lower, the transfer base material was peeled off from the fabric to obtain a printed material. Further, the obtained printed material was placed on the lower platen again, and a silicon release paper was placed on the printed material, followed by stamping for 5 seconds to pressure-bond the image onto the fabric.

### - Transfer step in Examples 21 and 22 and Comparative Examples 4 and 5 -

A transfer press machine TP-630M available from Horizon International Inc. was used. The heating temperature was set to 150°C, and the press load was set to 3 kN (transfer pressure: 400 g/cm²).

A fabric as a transfer-receiving medium was placed on the lower platen, and the transfer medium was further placed thereon with the printed surface facing downward, followed by stamping for 3 seconds. After the stamping, after the temperature of the fabric was lowered to 40°C or lower, the transfer base material was peeled off from the fabric to obtain a printed material.

Note that in the transfer step, a 100% cotton white T-shirt available from Hanes was used as a cotton fabric, a 100% polyester white T-shirt (product number: 5900-01) available from C.A.B. CLOTHING INC. was used as a polyester fabric, and a 100% nylon coyote color jacket (product number: 7059-01) available from C.A.B. CLOTHING INC. was used as a nylon fabric.

### Characteristic evaluation

### (1) Transferability evaluation

When the image printed by the inkjet printer remained on the transfer base material after the transfer treatment obtained in each Example and each Comparative Example, it was evaluated as ×, and when it did not remain, it was evaluated as o.

### (2) Evaluation of texture of printed material

Each printed material obtained in each Example and each Comparative Example was evaluated by touching. When stiffness was felt for the printed material, it was evaluated as ×, and when the printed material was easily bent and softness was close to that of the fabric itself, it was evaluated as o. Note that in Comparative Examples 1, 4, and 5, all the inks could not be transferred, and thus texture of the printed material could not be evaluated.

### (3) Evaluation of fastness to wet rubbing of printed material

A printed material obtained in each of Examples and each of Comparative Examples was subjected to a wet rubbing test in accordance with the method prescribed in JIS L0849 using a type II tester and attached white cloth of cotton No. 3-1 under a load of 200 g with 100 reciprocations, and fastness to wet rubbing was evaluated using a gray scale for discoloration and fading. Note that in Comparative Examples 1, 4, and 5, all the inks could not be transferred, and thus the fastness to wet rubbing of the printed material could not be evaluated.
⊚: Contamination of grade 4-5 or higher in wet rubbing test
∘: Contamination of grade 3-4 or grade 4 in wet rubbing test
△: Contamination of grade 2-3 or grade 3 in wet rubbing test
×: Contamination of grade 2 or less in wet rubbing test

### (4) Evaluation of fastness to washing of printed material

The printed material obtained in each Example and each Comparative Example was washed by repeating "from washing through rinsing to dehydration" five times continuously under the following conditions, and the product obtained after the fifth dehydration was used as a sample.
· Washing machine: product number NA-F5B1 (available from Panasonic Corporation)
· Water amount: 32 L
· Course: one rinsing selected
· Detergent: Ariel Laundry Detergent Liquid Disinfection Plus (available from P & G), used amount: 35 g

For the samples obtained by the above-described method, the fastness to washing was evaluated from the exposure ratio of the fabric due to cracking or peeling of the print. The exposure ratio was determined by printing the sample surface (transfer-printed portion) with a copying machine, determining the ratio of the area of the portion where the fabric was exposed to the area of the transfer-printed portion using an image processing apparatus, and determining the obtained value as the exposure ratio. Note that in Comparative Examples 1, 4, and 5, all the inks could not be transferred, and thus the fastness to washing of the printed material could not be evaluated.
⊚: Exposure ratio of fabric is 0.1% or less
∘: Exposure ratio of fabric is more than 0.1% and 2.0% or less
△: Exposure ratio of fabric is more than 2.0% and 4.0% or less
×: Exposure ratio of fabric is more than 4.0%

### (5) Evaluation of yellowing of adhesive ink layer

The adhesive ink layer in the transfer medium obtained after the above (drying step) was visually confirmed, and when yellowing of the adhesive ink layer was not observed, it was evaluated as "Absent", and when yellowing of the adhesive ink layer was observed, it was evaluated as "Present".

**[Table 2]**

| | | Examples | | | | | | | | | | | | | |
|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 |
| Colored ink | Cyan ink | Used | Used | Used | Used | Used | Used | Used | Used | Used | Used | Used | Used | Used | Used |
| | White ink | Used | Used | Not used | Used | Used | Used | Used | Used | Used | Used | Used | Not used | Used | Used |
| Adhesive ink | | 1 | 1 | 1 | 1 | 1 | 2 | 3 | 4 | 5 | 6 | 7 | 7 | 8 | 9 |
| Thickness of adhesive ink layer | | 15 µm | 90 µm | 30 µm | 30 µm | 30 µm | 30 µm | 30 µm | 30 µm | 30 µm | 30 µm | 30 µm | 30 µm | 30 µm | 30 µm |
| Fabric | | Cotton | Cotton | Cotton | Polyester | Nylon | Cotton | Cotton | Cotton | Cotton | Cotton | Cotton | Cotton | Cotton | Cotton |
| (1) Transferability | | ○ | ○ | ○ | ○ | ○ | ○ | ○ | ○ | ○ | ○ | ○ | ○ | ○ | ○ |
| (2) Texture | | ○ | ○ | ○ | ○ | ○ | ○ | ○ | ○ | ○ | ○ | ○ | ○ | ○ | ○ |
| (3) Fastness to wet rubbing | | ⊚ | ⊚ | ○ | Δ | ○ | ⊚ | ⊚ | ⊚ | ⊚ | ○ | ⊚ | ○ | Δ | ⊚ |
| (4) Fastness to washing | | Δ | Δ | Δ | Δ | Δ | Δ | Δ | Δ | Δ | Δ | Δ | Δ | Δ | Δ |
| (5) Yellowing of adhesive layer | | Absent | Absent | Absent | Absent | Absent | Absent | Absent | Absent | Absent | Absent | Present | Present | Present | Present |

**[Table 3]**

| | | Examples | | | | | | Comparative Example | | |
|---|---|---|---|---|---|---|---|---|---|---|
| | | 15 | 16 | 17 | 18 | 19 | 20 | 1 | 2 | 3 |
| Colored ink | Cyan ink | Used | Used | Used | Used | Used | Not used | Used | Used | Used |
| | White ink | Used | Used | Used | Not used | Not used | Not used | Used | Used | Used |
| Adhesive ink | | 1 | 13 | 17 | 14 | 15 | 16 | 10 | 11 | 12 |
| Thickness of adhesive ink layer | | 30 µm | 30 µm | 30 µm | 30 µm | 30 µm | 30 µm | 30 µm | 30 µm | 30 µm |
| Fabric | | Cotton | Cotton | Cotton | Cotton | Cotton | Cotton | Cotton | Cotton | Cotton |
| (1) Transferability | | ○ | ○ | ○ | ○ | ○ | ○ | × | ○ | ○ |
| (2) Texture | | ○ | ○ | ○ | ○ | ○ | ○ | Evaluation impossible | × | ○ |
| (3) Fastness to wet rubbing | | ⊚ | ⊚ | ⊚ | Δ | ⊚ | ⊚ | Evaluation impossible | × | × |
| (4) Fastness to washing | | Δ | ⊚ | ○ | Δ | ○ | ○ | Evaluation impossible | × | × |
| (5) Yellowing of adhesive layer | | Absent | Absent | Absent | - | - | - | - | - | - |

**[Table 4]**

| | | Examples | | Comparative Example | |
|---|---|---|---|---|---|
| | | 21 | 22 | 4 | 5 |
| Colored ink | Cyan ink | Used | Used | Used | Used |
| | White ink | Used | Used | Used | Used |
| Adhesive ink | | 1 | 13 | 11 | 12 |
| Thickness of adhesive ink layer | | 30 µm | 30 µm | 30 µm | 30 µm |
| Fabric | | Cotton | Cotton | Cotton | Cotton |
| (1) Transferability | | ○ | ○ | × | × |
| (2) Texture | | ○ | ○ | Evaluation impossible | Evaluation impossible |
| (3) Fastness to wet rubbing | | ○ | ○ | Evaluation impossible | Evaluation impossible |
| (4) Fastness to washing | | Δ | ○ | Evaluation impossible | Evaluation impossible |
| (5) Yellowing of adhesive layer | | Absent | Absent | - | - |

In Examples 1 to 22 in which the glass transition temperature and the weight average molecular weight of the resin contained in the adhesive ink are adjusted to fall within the predetermined ranges, the transferability to the fabric during transfer printing is excellent, and the fastness to wet rubbing and the texture of the obtained printed material are excellent.

### Reference Signs List

100 Transfer medium
1 Transfer base material
2 Colored ink layer
3 Adhesive ink layer
4 Ink-receiving layer
5 Release layer
6 Fabric

## Claims

1. An adhesive ink for inkjet printing to be used for transfer printing onto a fabric, the adhesive ink comprising:
a resin; a water-soluble organic solvent; and water, wherein
the resin has a glass transition temperature of 30°C or lower and a weight average molecular weight of 10000 to 700000.

2. The adhesive ink according to claim 1, wherein the resin includes at least one selected from the group consisting of an acrylic-based resin and a polyester-based resin.

3. The adhesive ink according to claim 1, wherein the resin is contained in the adhesive ink as an emulsion particle.

4. The adhesive ink according to claim 1, wherein the fabric is formed of cotton, a polyester fiber, a polypropylene fiber, a nylon fiber, or a mixture thereof.

5. An ink set comprising:
the adhesive ink described in claim 1; and
a colored ink containing a pigment and a resin.

6. The ink set according to claim 5, wherein
the resin contained in the adhesive ink includes at least one selected from the group consisting of an acrylic-based resin and a polyester-based resin, and
the resin contained in the colored ink includes at least one selected from the group consisting of an acrylic-based resin and a polyester-based resin.

7. A transfer medium, wherein the adhesive ink described in claim 1 is printed on a transfer base material with or without a colored ink layer interposed between the adhesive ink and the transfer base material, the colored ink layer being formed of a colored ink containing a pigment and a resin.

8. The transfer medium according to claim 7, wherein the transfer base material is a plastic film or paper.

9. The transfer medium according to claim 7, further comprising an ink-receiving layer on a surface of the transfer base material, the surface being a surface on which the adhesive ink is printed.

10. A printed material obtained by transfer printing using the adhesive ink described in claim 1.

11. A method for producing a transfer medium for transfer printing onto a fabric, the method comprising:
a step 3 of printing an adhesive ink by inkjet printing on a transfer base material or on a colored ink layer laminated on a transfer base material; and
a step 4 of drying the adhesive ink, wherein
the adhesive ink used in the step 3 contains a resin, a water-soluble organic solvent, and water, and the resin has a glass transition temperature of 30°C or lower and a weight average molecular weight of 10000 to 700000.

12. The production method according to claim 11, wherein
the step 3 is a step of printing the adhesive ink by inkjet printing on the colored ink layer laminated on the transfer base material, and
the colored ink layer is formed by a step 1 of printing a colored ink by inkjet printing on the transfer base material and a step 2 of drying the colored ink.

13. The production method according to claim 12, wherein the step 2 is a step of evaporating 20 to 80 mass% of 100 mass% of components excluding a solid content of the colored ink.

14. The production method according to claim 11, wherein a thickness of the adhesive ink is 0.5 to 200 µm after the step 4 of drying.

15. A method for producing a printed material, the method comprising transfer-printing the transfer medium obtained by the production method described in claim 11 onto a fabric.

16. The production method according to claim 15, wherein
the transfer-printing includes a close contact step of bringing a surface of the transfer medium on which the adhesive ink is printed into close contact with the fabric in a state where the surface faces the fabric, and a step of peeling off the transfer base material from the fabric, and
a close contact time in the close contact step is 30 seconds or shorter.
